# FASCICULE DE BREVET EUROPEEN

(11) **EP 3 087 104 B1**
(45) Date de publication et mention de la délivrance du brevet: **13.11.2019**
(21) Numéro de dépôt: 14825151.5
(22) Date de dépôt: 22.12.2014
(51) Int. Cl.: C08C 19/08, B60C 1/00, C08F 4/52, C08L 15/00

(54) **PROCÉDÉ DE DÉPOLYMÉRISATION CONTRÔLÉE DU CAOUTCHOUC NATUREL PAR MÉTATHÈSE À PARTIR D'UN LATEX DE CAOUTCHOUC NATUREL**
VERFAHREN ZUR GESTEUERTEN -METATHESENDEPOLYMERISIERUNG VON NATURKAUTSCHUK AUS NATURKAUTSCHUKLATEX
METHOD FOR CONTROLLED METATHESIS DEPOLYMERIZATION OF NATURAL RUBBER FROM NATURAL RUBBER LATEX

(30) Priorité: 23.12.2013 FR 1363391
(43) Date de publication de la demande: 02.11.2016
(73) Titulaire: Compagnie Générale des Etablissements Michelin, 63000 Clermont-Ferrand (FR)
(72) Inventeur: JEAN-BAPTISTE-DIT-DOMINIQUE, François, F-63040 Clermont-Ferrand Cedex 09 (FR)
(74) Mandataire: Gandon-Pain, Sylvie
(86) Numéro de dépôt international: PCT/EP2014/079081
(87) Numéro de publication internationale: WO 2015/097191

(56) Documents cités:
- DATABASE WPI Week 201358 Thomson Scientific, London, GB; AN 2013-M32130 XP002729165, & WO 2013/118496 A1 (TOYO RUBBER IND CO LTD) 15 août 2013 (2013-08-15)
- SHAILENDRA SINGH SOLANKY ET AL: "Metathetic Selective Degradation of Polyisoprene: Low-Molecular-Weight Telechelic Oligomer Obtained from Both Synthetic and Natural Rubber", MACROMOLECULAR CHEMISTRY AND PHYSICS, WILEY-VCH VERLAG, WEINHEIM, DE, vol. 206, no. 10, 17 mai 2005 (2005-05-17) , pages 1057-1063, XP002595174, ISSN: 1022-1352, DOI: 10.1002/MACP.200400416
- VINCENT LAPINTE, LARUENT FONTAINE, VÉRONIQUE MONTEMBAULT, IRÈNE CAMPISTRON, DANIÈLE REYX: "RING-OPENING METATHESIS POLYMERIZATION (ROMP) OF ISOMERICALLY PURE FUNCTIONAL MONOMERS AND ACYCLIC DIENE METATHESIS DEPOLYMERIZATION (RETRO-ADMET) OF FUNCTIONALIZED POLYALKENAMERS", JOURNAL OF MOLECULAR CATALYSIS A: CHEMICAL, no. 190, 2 décembre 2002 (2002-12-02), pages 117-129, XP002729158,
- SUWADEE KONGPARAKUL ET AL: "Metathesis hydrogenation of natural rubber latex", APPLIED CATALYSIS A: GENERAL, ELSEVIER SCIENCE, AMSTERDAM, NL, vol. 405, no. 1-2, 3 octobre 2011 (2011-10-03), pages 129-136, XP002690182, ISSN: 0926-860X, DOI: 10.1016/J.APCATA.2011.07.039 [extrait le 2011-08-05]
- SADAKA FATEN ET AL: "Telechelic oligomers obtained by metathetic degradation of both polyisoprene and styrene-butadiene rubbers. Applications for recycling waste tyre rubber", POLYMER DEGRADATION AND STABILITY, BARKING, GB, vol. 98, no. 3, 28 December 2012 (2012-12-28), pages 736-742, XP028577456, ISSN: 0141-3910, DOI: 10.1016/J.POLYMDEGRADSTAB.2012.12.018
- GUTIÉRREZ S ET AL: "DEGRADATION OF NATURAL RUBBER VIA CROSS-METATHESIS WITH FUNCTIONALIZED OLEFINS USING RUTHENIUM ALKYLIDEN CATALYSTS", REVISTA LATINOAMERICANA DE METALURGIA Y MATERIALES, CARACAS, VE , vol. S1, no. 4 29 July 2009 (2009-07-29), pages 1463-1467, XP002595176, ISSN: 0255-6952 Retrieved from the Internet: URL:www.polimeros.labb.usb.ve/RLMM/home.ht ml [retrieved on 2010-08-03]

## Description

La présente invention se rapporte à un procédé de dépolymérisation d'un latex de caoutchouc naturel pour la préparation d'un polyisoprène modifié comprenant majoritairement un mélange de l'espèce fonctionnalisée à l'une de ses deux extrémités par un ou plusieurs groupes fonctionnels et de l'espèce fonctionnalisée à ses deux extrémités par un ou plusieurs groupes fonctionnels.

L'invention concerne également le latex de polyisoprène modifié susceptible d'être obtenu par ce procédé ainsi que le polyisoprène modifié susceptible d'être obtenu par ce procédé. Enfin, l'invention concerne une composition de caoutchouc, utilisable notamment pour la fabrication de pneumatiques, à base d'un ou de plusieurs des polyisoprènes modifiés précités.

Une composition de caoutchouc renforcée par du noir de carbone ou une autre charge renforçante et destinée à la fabrication de pneumatique doit présenter des propriétés mécaniques et dynamiques spécifiques qui permettent au pneumatique d'obéir à un grand nombre d'exigences techniques.

Depuis que les économies de carburant et la nécessité de protéger l'environnement sont devenues une priorité, il s'est avéré nécessaire de produire des pneumatiques ayant de bonnes propriétés d'adhérence tout en ayant une résistance au roulement réduite. L'abaissement de l'hystérèse d'une composition de caoutchouc est un descripteur d'une plus basse résistance au roulement pour les pneumatiques les comportant.

Pour atteindre l'objectif d'abaissement de l'hystérèse, de nombreuses solutions ont déjà été expérimentées. Il a notamment été proposé de modifier la structure du caoutchouc le long ou en bout de la chaîne polymérique par l'introduction de fonctions chimiques permettant d'assurer une bonne dispersion et donc une interaction plus grande de la charge renforçante au sein du polymère.

Différents types de réactions sur les insaturations du caoutchouc naturel permettant la fonctionnalisation le long de la chaine sont connus dans la littérature.

La demande de brevet GB 2113692 décrit par exemple, l'époxydation de *cis* 1,4-polyisoprène le long de la chaîne polymérique.

Le document WO 2004/106397 décrit la fonctionnalisation de la chaine polymérique au moyen d'un monomère de type vinylique, acrylate ou méthacrylate par voie radicalaire.

Enfin, le document EP 1484359 décrit l'ouverture d'époxydes au moyen d'acides de Lewis pour fonctionnaliser le caoutchouc naturel le long de la chaine polymérique.

Des méthodes de fonctionnalisation des chaines polymériques en bout de chaine ont aussi été développées.

On peut notamment citer à ce propos, la demande EP 2348055 qui concerne l'hydrolyse des phospholipides en phase latex suivie d'une estérification en solvant organique.

La réaction de métathèse des oléfines est une bonne alternative pour synthétiser des chaines polymériques fonctionnalisées en bout de chaine. Cette réaction est étudiée depuis plus de 40 ans aussi bien dans le domaine académique qu'industriel.

Ainsi, la recherche s'est focalisée sur la dépolymérisation par métathèse de polyène en solvant organique, notamment du polybutadiène (BR pour « Butadiene Rubber ») ou un copolymère styrène-butadiène, (SBR pour « Styrene-Butadiene Rubber »), afin d'accéder à toute une gamme d'oligomères fonctionnels.

En revanche, la dégradation du polyisoprène synthétique, ou de déchets pneumatiques (poudrettes) par métathèse, notamment pour la synthèse d'oligoisoprènes téléchéliques, a été moins explorée.

Les réactions de retro-ADMET (pour « Acyclic diene metathesis ») en solvant organique en présence d'un agent de transfert de chaîne fonctionnel pour générer des oligomères téléchéliques ont été également conduites sur du caoutchouc naturel (NR pour « Natural Rubber »).

La raréfaction des matières premières issues des énergies fossiles telles que les monomères utilisés (styrène, butadiène, isoprène) pour générer des élastomères synthétiques et fonctionnels pousse la recherche dans le pneumatique à chercher des alternatives et notamment à utiliser des matières premières bio-sourcées telles que les latex de caoutchouc naturel.

De plus, l'étape de re-solubilisation du caoutchouc naturel étant toujours pénalisante en termes de coûts et de toxicité (volume important et nature des solvants utilisés), des méthodes de dépolymérisation du caoutchouc naturel directement en phase latex ont été également étudiées.

Des essais de dépolymérisation en phase latex en présence d'un co-solvant (acétonitrile), réalisés par Pilard et al, (Macromol. Chem. Phys. 2005, 206, 1057) ont démontré une certaine efficacité, et une relative tolérance, du catalyseur de Grubbs II pour ce milieu aqueux hétérogène. Ainsi, la dépolymérisation à température ambiante d'un latex de caoutchouc naturel déprotéinisé en présence de 1,4-diacétoxybut-2-ène conduit à température ambiante à des polyisoprènes fonctionnels acétate de masse molaire moyenne centrée sur 38 Kg/mol avec un indice de polydispersité de 4, mais avec un temps de réaction peu compatible avec une application industrielle (24 heures).

De plus, le latex de caoutchouc naturel déprotéinisé nécessite un traitement supplémentaire par centrifugation en présence d'un agent tensioactif et en présence ou non d'un solvant polaire ou d'une enzyme, rendant cette étape particulièrement coûteuse.

Rempel et al (Applied Cat. A : Gen. 2011, 405, 1-2, 129) a décrit un procédé de modification du caoutchouc naturel en phase latex qui implique à la fois une réaction de dépolymérisation du caoutchouc naturel par métathèse en présence de 1,4-diacétoxybut-2-ène et à la fois une réaction d'hydrogénation pour conduire à des polymères hydrogénés et fonctionnels en bout de chaîne.

Cependant, cette méthode de synthèse nécessite de fortes dilutions du produit de départ avec une teneur en caoutchouc naturel sec dans le milieu de 0,7 % (ou DRC pour « Dry Rubber Content ») associées à des quantités importantes d'agent tensioactif (140 pce pour parties pour cent d'élastomère en poids) et les fortes pressions d'hydrogène nécessaires à sa réalisation (40 bars).

De plus, la présence d'une quantité résiduelle importante d'agent tensioactif dans l'élastomère peut conduire à une pénalisation forte des propriétés en mélange.

Enfin, ce procédé n'est pas compatible avec tous types de latex de caoutchouc naturel.

Enfin, le document JP 2007/204637 décrit un procédé de modification du latex de caoutchouc naturel, par métathèse et fonctionnalisation en bout de chaine au moyen d'un agent de transfert.

Cependant, ce procédé a une cinétique de dépolymérisation très lente, peu compatible avec une application à l'échelle industrielle.

Il existe donc un besoin de développer un procédé optimisé de synthèse de polyisoprène fonctionnalisé en bout de la chaîne par dépolymérisation du caoutchouc naturel par métathèse directement en phase latex, et ceci avec des quantités d'agents tensioactifs et des gammes de dilutions convenables et applicables à une échelle industrielle.

Il a maintenant été mis au point un procédé de synthèse permettant d'améliorer la réaction de dépolymérisation d'un latex de caoutchouc naturel par métathèse via l'introduction d'un acide inorganique en présence d'un solvant organique et d'un agent tensio actif.

L'invention a donc pour objet un procédé de dépolymérisation d'un latex de caoutchouc naturel pour la préparation d'un polyisoprène modifié comprenant majoritairement un mélange de l'espèce fonctionnalisée à l'une de ses deux extrémités par un ou plusieurs groupes fonctionnels et de l'espèce fonctionnalisée à ses deux extrémités par un ou plusieurs groupes fonctionnels, ledit procédé comprenant les étapes suivantes :
i) une étape d'ajout au latex d'un ou plusieurs agents tensioactifs, puis
ii) une étape d'acidification du latex à un pH inférieur au point isoélectrique des protéines du latex de caoutchouc naturel par l'ajout au latex d'un ou plusieurs acides inorganiques,
iii) une étape d'ajout au latex d'un ou plusieurs agents de transfert comprenant le ou lesdits groupes fonctionnels,
iv) une étape d'ajout au latex d'un ou plusieurs solvants organiques choisis parmi les solvants hydrocarbonés cycliques, linéaires et aromatiques,
v) une étape d'ajout au latex d'un ou plusieurs catalyseurs de réaction de métathèse,
chaque étape ii) à v) étant réalisée simultanément, avant ou après une autre des étapes ii) à v).

Le procédé selon l'invention a l'avantage d'être mis en œuvre directement sur le latex de caoutchouc naturel sans étape préalable de purification.

De plus, le procédé selon l'invention est efficace et rapide et peut être mis en œuvre à l'échelle industrielle.

Le procédé selon l'invention est également compatible avec un grand nombre de latex de caoutchouc naturel.

Enfin, le procédé selon l'invention est compatible avec un grand nombre d'agent de transfert.

Le procédé selon l'invention permet en particulier d'obtenir un polyisoprène modifié utilisable dans des compositions élastomériques et présentant une masse molaire moyenne en nombre élevée.

L'invention a donc également pour objet un latex de polyisoprène modifié susceptible d'être obtenu par le procédé ci-dessus, la masse molaire moyenne en nombre du polyisoprène variant de 50 à 600 kg/mol.

L'invention a également pour objet un polyisoprène modifié susceptible d'être obtenu par le procédé ci-dessus, la masse molaire moyenne en nombre du polyisoprène variant de 50 à 600 kg/mol.

L'invention a aussi pour objet un polyisoprène modifié comprenant majoritairement un mélange de l'espèce de formule générale I suivante et de l'espèce de formule générale II suivante : 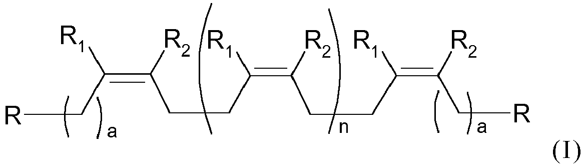 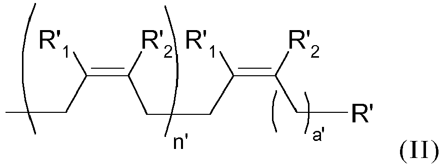
avec R₁, R₂, R'₁ et R'₂, indépendamment les uns des autres, choisis parmi un atome d'hydrogène ou un groupe méthyle, R₁ étant différent de R₂ et R'₁ étant différent de R'₂,
n et n', indépendamment l'un de l'autre, étant des nombres entiers variant de 735 à 8900,
R et R', indépendamment l'un de l'autre, étant des groupes fonctionnels comprenant un ou plusieurs groupes choisis parmi un halogène, une amine, une imine, un ammonium, une imide, un amide, un nitrile, un azo, un diazo, une hydrazo, un carbamate, un hydroxyle, un carbonyle, un carboxyle, un ester, un époxy, un sulfure, un disulfure, un thiocarbonyle, un trithiocarbamate, un sulfonyle, un sulfinyle, un silane, un alkoxysilane, un stannyle, un boré, un hétérocycle azoté, un hétérocycle oxygéné, un hétérocycle soufré et un groupement aromatique substitué par les groupes précédemment cités,
a et a', indépendamment l'un de l'autre, étant des nombres entiers variant de 0 à 20,

la masse molaire moyenne en nombre du polyisoprène variant de 50 à 600 kg/mol.

Ce polyisoprène selon l'invention peut être obtenu par le procédé selon l'invention.

Enfin, l'invention a pour objet une composition élastomérique à base d'un ou plusieurs polyisoprènes modifiés tels que définis précédemment.

L'invention ainsi que ses avantages seront aisément compris à la lumière de la description et des exemples de réalisations qui suivent.

Dans la présente demande, il convient de préciser qu'il est connu de l'homme du métier que lorsqu'on dépolymérise un latex de caoutchouc naturel par métathèse en présence d'un ou plusieurs agents de transfert, on obtient un mélange d'espèces modifiées de ce caoutchouc naturel dont la composition dépend notamment du choix de l'agent de transfert, de la quantité d'agent de transfert, de la température et de la durée de la réaction de dépolymérisation. Ce mélange peut comprendre notamment des espèces fonctionnalisées à une ou à leurs deux extrémités, et des espèces non fonctionnalisées.

Dans la présente demande, par « majoritairement un mélange », on entend que ce mélange est majoritaire parmi les espèces issues de la réaction de dépolymérisation, c'est-à-dire que ce mélange représente la plus grande fraction pondérale parmi les espèces issues de la réaction de dépolymérisation.

Egalement, une espèce fonctionnalisée d'un polyisoprène modifié dite majoritaire est celle représentant la plus grande fraction pondérale parmi les espèces issues de la réaction de dépolymérisation. Dans un système comprenant un seul composé d'un certain type, celui-ci est majoritaire au sens de la présente invention.

De la même manière, une charge dite majoritaire est celle représentant la plus grande fraction pondérale par rapport au poids total de l'ensemble des charges de la composition.

On entend dans la présente demande par « composition à base de » une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

On entend dans la présente demande par « point isoélectrique » d'une molécule, le pH pour lequel la charge globale de la molécule est nulle, ou autrement dit, le pH pour lequel la molécule est électriquement neutre.

Dans la présente demande, on entend par « partie pour cent d'élastomère » ou « pce », la partie en poids d'un constituant pour 100 parties en poids de l'élastomère. Ainsi, un constituant à 60 pce signifiera par exemple 60 g de ce constituant pour 100 g d'élastomère.

Comme expliqué précédemment, le procédé selon l'invention est mis en œuvre directement à partir d'un latex de caoutchouc naturel.

Le latex de caoutchouc naturel utilisable dans le procédé selon l'invention peut exister sous différentes formes comme le détaille par exemple le chapitre 3 « Latex concentrates : properties and composition », de K.F. Gaseley, A.D.T. Gordon et T.D. Pendle dans « Naturel Rubber Science and Technology », A.D. Roberts, Oxford University Press - 20 1988.

En particulier, on peut notamment citer :
- les latex de caoutchouc naturel dits « de champ » (« field latex »),
- les latex de caoutchouc naturel dits « concentrés » (« concentrated natural rubber latex ») ou centrifugés (« centrifugally concentrated latex »),
- les latex traités à l'ammoniaque, par exemple le latex du type HANR (pour « High Ammonia Natural Rubber ») ou du type LATZ (pour « Low Ammonia / TMTD/ZnO »),
- les latex prévulcanisés, saponifiés ou modifié chimiquement, par exemple le caoutchouc naturel époxydé, greffé par voie radicalaire ou encore hydrogéné,
- les latex autres qu'issus de l'hévéa, et de préférence les latex issus de la Gutta Percha, du Dandelion ou de la Guayule.

Ces différents latex peuvent être utilisés seuls ou en combinaison comme matière première dans le procédé selon l'invention.

De manière particulièrement préférée dans le procédé selon l'invention, le latex de caoutchouc naturel utilisé est non-déprotéinisé.

De manière particulièrement préférée et c'est un avantage du procédé selon l'invention, ce procédé ne comprend pas d'étape préalable de déprotéinisation du latex de caoutchouc naturel.

De manière préférée dans le procédé selon l'invention, l'étape v) est réalisée simultanément ou après l'étape ii).

De manière préférée dans le procédé selon l'invention, le latex de caoutchouc naturel utilisé présente une teneur en caoutchouc sec (DRC pour « Dry Rubber Content ») variant de 15 à 60 % en poids, par rapport au poids total de latex.

De manière préférée, afin d'optimiser le procédé selon l'invention, le latex de caoutchouc naturel peut être dilué au moyen d'eau distillée.

Ainsi, le procédé selon l'invention peut comprendre en outre une étape de dilution du latex de caoutchouc naturel au moyen d'eau distillée, précédemment aux étapes ii) à v).

De préférence, le milieu après la dilution du latex de caoutchouc naturel présente une teneur en caoutchouc sec variant de 5 à 60 % en poids, plus préférentiellement variant de 10 à 30 % en poids, et en particulier variant de 5 à 30 % en poids, par rapport au poids total du milieu.

De manière préférée, le milieu peut être inerté, c'est-à-dire mis sous une atmosphère inerte, de préférence au moyen d'un barbotage d'azote ou d'argon directement dans le milieu. Ceci permet notamment de protéger le milieu de l'oxygène de l'air.

Le procédé selon l'invention peut donc comprendre en outre une étape d'inertage, de préférence par barbotage du latex de caoutchouc naturel, précédemment aux étapes ii) à v).

De préférence, cette étape a une durée variant de 10 mn à 2 heures, plus préférentiellement variant de 10 à 60 minutes.

Comme expliqué précédemment, le procédé selon l'invention comprend une étape d'ajout au latex d'un ou plusieurs agents tensioactifs (étape i).

Ce ou ces agents tensioactifs permettent notamment de stabiliser le latex dans le milieu.

En effet, au fur et à mesure de la réaction, en l'absence d'un agent tensioactif, le latex de caoutchouc naturel pourrait se déstabiliser en présence d'acide ou par l'addition d'un co-solvant et entrainer la coagulation précipitée du caoutchouc.

Le ou les agents tensioactifs peuvent être ajoutés au latex avant ou après l'étape de dilution du latex à l'eau distillée quand cette étape est présente dans le procédé selon l'invention.

Le ou les agents tensioactifs utilisables dans le procédé selon l'invention peuvent être choisis parmi les agents tensioactifs anioniques, cationiques, amphotères ou non-ioniques.

A titre d'agents tensioactifs anioniques, on peut notamment citer tous les agents tensioactifs anioniques comprenant au moins un groupe alkyle en C₆-C₄₀ ou au moins un cycle aromatique substitué par un groupe alkyle en C₆-C₄₀, et au moins un groupe anionique choisi parmi les sulfates, les sulfonates, les phosphates, les phosphonates, et les carboxylates.

De préférence, le ou les agents tensioactifs anioniques comprenant au moins un groupe alkyle en C₆-C₄₀ ou au moins un cycle aromatique substitué par un groupe alkyle en C₆-C₄₀ sont choisis parmi le stéarate de sodium, le laurylsulfate de sodium, le lauryl éther sulfate de sodium et les dodécylbenzène sulfonates de sodium.

A titre d'agents tensioactifs cationiques, on peut notamment citer tous les agents tensioactifs cationiques comprenant au moins un groupe alkyle en C₆-C₄₀ ou au moins un cycle aromatique substitué par un groupe alkyle en C₆-C₄₀, et au moins un groupe cationique choisi parmi les ammoniums et les pyridiums.

De préférence, le ou les agents tensioactifs cationiques sont choisis parmi les sels d'alkyltriméthylammonium tels que le chlorure ou le bromure de triméthyldécylammonium et les sels de benzalkonium.

A titre d'agents tensioactifs amphotères, on peut notamment citer les acides aminés amphotères et les bétaïnes amphotères.

Les agents tensioactifs amphotères sont de préférence, choisis parmi la phosphatidylcholine et la N,N-diméthyl-N-dodécylglycine bétaine vendu sous le nom commercial Empigen® par la société Sigma-Aldrich.

A titre d'agents tensioactifs non-ioniques, on peut notamment citer les alkanolamides et les esters, et plus particulièrement les esters de glycol tels que le stéarate d'éthylène glycol, les esters de glycérol tels que le stéarate de glycérol, les esters de sorbitan et les esters de sorbitan polyoxyéthyléniques tels que le Tween® vendu par la société Sigma-Aldrich.

On peut aussi citer les condensats d'oxyde d'alkylène contenant une ou plusieurs chaines lipophiles.

Le ou les chaines lipophiles peuvent être un phénol substitué par une chaine alkyle en C₆-C₄₀, par exemple le nonylphénol ou un alcool, une amine ou un acide carboxylique à chaîne alkyle en C₆-C₄₀.

L'oxyde d'alkylène est généralement l'oxyde d'éthylène ou l'oxyde de propylène et généralement la chaîne polyéther contient de 18 à 30 unités d'oxyde d'alkylène bien que des chaînes plus longues, par exemple jusqu'à 75 unités d'oxyde d'alkylène peuvent parfois être utilisées.

A titre d'exemple d'agents tensioactifs non-ioniques, on peut citer le produit commercial Sinnopal NP 307® vendu par la société Cognis.

De manière préférée, le ou lesdits agents tensioactifs sont choisis parmi les agents tensioactifs non-ioniques, et de préférence l'agent tensioactif est le polyoxyéthylène glycol dodécyl éther.

Ce composé est notamment vendu sous la famille de produit commerciaux Brij® vendu par les sociétés Sigma-Aldrich et Acros.

Le ou les agents tensioactifs utilisables dans le procédé selon l'invention peuvent être utilisés seuls ou en combinaison de deux ou plusieurs d'entre eux.

De manière préférée, le ou lesdits agents tensioactifs peuvent représenter de 0,1 à 20 pce, plus préférentiellement de 0,5 à 15 pce, et en particulier de 1 à 10 pce, par rapport au caoutchouc naturel sec.

Comme expliqué précédemment, l'étape ii) du procédé selon l'invention consiste en une acidification du latex à un pH inférieur au point isoélectrique des protéines du latex de caoutchouc naturel par ajout au latex d'un ou plusieurs acides inorganiques.

On entend par acide inorganique, une substance qui, une fois dissoute dans l'eau, libère des ions hydrogène et qui peut donc notamment protoner les résidus aminés du non-caoutchouc et ainsi réduire l'effet polluant de ces résidus sur le catalyseur de métathèse.

Le ou les acides inorganiques utilisables dans le procédé selon l'invention sont de préférence choisis parmi les hydracides et les oxacides.

A titre d'hydracides, on peut citer l'acide fluorhydrique, l'acide chlorhydrique, l'acide bromhydrique, l'acide cyanhydrique et l'acide iodhydrique.

A titre d'oxacides, on peut citer l'acide perchlorique, l'acide chlorique, l'acide chloreux, l'acide hypochloreux, l'acide nitrique, l'acide nitreux, l'acide sulfurique, l'acide sulfureux et l'acide phosphorique.

De manière préférée dans le procédé selon l'invention, le ou les acides inorganiques sont de préférence choisis parmi les oxacides, et en particulier l'acide inorganique est l'acide phosphorique.

Le ou les acides inorganiques peuvent être utilisés seuls ou en combinaison de deux ou plusieurs d'entre eux.

De manière préférée, le ou lesdits acides inorganiques peuvent représenter de 0,1 à 20 pce, plus préférentiellement de 1 à 10 pce, par rapport au caoutchouc naturel sec.

De manière tout particulièrement préférée dans le procédé selon l'invention, le ratio pondéral de la quantité d'acide inorganique ajouté au latex sur la quantité d'agent tensioactif ajouté au latex varie de 0,05 à 20, de préférence de 0,1 à 10.

Comme expliqué précédemment, l'étape iii) du procédé selon l'invention consiste à ajouter au latex un ou plusieurs agents de transfert comprenant le ou lesdits groupes fonctionnels.

Le ou les agents de transfert utilisables dans le procédé selon l'invention permettent la fonctionnalisation du caoutchouc naturel via une réaction de métathèse croisée avec une chaine de polymère en présence d'un catalyseur.

Par conséquent, le ou les agents de transferts sont des molécules hydrocarbonées possédant une double liaison carbone-carbone, de configuration cis ou trans, symétriques ou non, mono- ou di-substituées.

De manière préférée, le ou les agents de transferts peuvent être choisis parmi les composés de formules III, IV et V suivantes 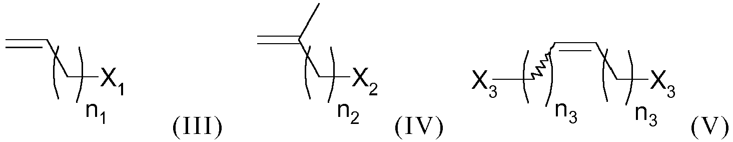
n₁, n₂ et n₃ étant des nombres entiers variant de 0 à 20,
X₁, X₂ et X₃ étant des groupes fonctionnels comprenant un ou plusieurs groupes choisis parmi un halogène, une amine, une imine, un ammonium, une imide, un amide, un nitrile, un azo, un diazo, une hydrazo, un carbamate, un hydroxyle, un carbonyle, un carboxyle, un ester, un époxy, un sulfure, un disulfure, un thiocarbonyle, un trithiocarbamate, un sulfonyle, un sulfinyle, un silane, un alkoxysilane, un stannyle, un boré, un hétérocycle azoté, un hétérocycle oxygéné, un hétérocycle soufré et un groupement aromatique substitué par un ou plusieurs des groupes précédemment cités.

A titre de groupe amine, on peut citer les amines primaires protégées ou non, secondaires ou tertiaires, les hétérocycles azotés ou des groupements aromatiques substitués par les fonctions amines citées précédemment.

A titre d'exemple d'agents de transfert comprenant une fonction amine, on peut notamment citer les amino-styrènes tels que la 4-vinylaniline, l'aminoalkyl-(méth)acrylate, le tert-butyl-N-allylcarbamate, la N-allyl-N,N-bis(triméthylsilyl)amine, le N,N,N',N'-tétraméthyl-2-butène-1,4-diamine, les N,N-dialkylaminoalkyl-(méth)acrylate, tel que le N,N-diméthylaminoéthyl (méth)acrylate et l'acryloyl morpholine.

Plus particulièrement à titre d'agent de transfert comprenant un ou plusieurs hétérocycles azotés, on peut citer les oléfines à base de pyrrole, d'histidine, d'imidazole, de triazolidine, de triazole, de triazine, de pyridine, de pyrimidine, de pyrazine, d'indole, de quinoline, de purine, de phénazine, de ptéridine, de mélamine.

A titre d'exemple de ces composés, on peut citer la 2-vinylpyridine, la 3-vinylpyridine, la 4-vinylpyridine et la 2-méthyl-5-vinylpyridine.

A titre d'exemple d'agent de transfert comprenant un ou plusieurs groupes imides ou groupes imides portés par un cycle, on peut citer le 2-butène-1,4-diylbis(phthalimide).

A titre de d'agent de transfert comprenant un ou plusieurs groupes amides, on peut citer l'acrylamide, le méthacrylamide et les N-alkyl (méth)acrylamide.

A titre d'exemple d'agent de transfert comprenant un ou plusieurs groupes nitriles ou groupes nitriles portés par un cycle, on peut citer le (méth)acrylonitrile, le cyanure de vinylidène et le 1,4-dicyano-2-butène.

A titre d'exemple d'agent de transfert comprenant un ou plusieurs groupes ammoniums ou groupes ammoniums portés par un cycle, on peut citer le chlorure de 3-buténylallylammonium.

A titre d'exemple d'agent de transfert comprenant un ou plusieurs groupes hydroxyles ou groupes hydroxyles portés par un cycle, on peut citer le cis-2-butène-1,4-diol, le 2-hydroxyéthyl (méth)acrylate, l'o-hydroxystyrène, le m-hydroxystyrène, le p-hydroxystyrène, l'o-hydroxy-α-méthylstyrène, le m-hydroxy-α-méthylstyrène, le p-hydroxy-α-méthylstyrène.

A titre d'exemple d'agent de transfert comprenant un ou plusieurs groupes carboxyles ou groupes carboxyles portés par un cycle, on peut citer l'acide (méth)acrylique, l'acide maléique, l'acide fumarique, l'acide itaconique, l'acide cinnamique, l'acide oléique, l'acide linoléique.

A titre d'exemple d'agent de transfert comprenant un ou plusieurs groupes esters ou groupes esters portés par un cycle, on peut citer le 1,4-diacétoxy-but-2-ène.

A titre d'exemple d'agent de transfert comprenant un ou plusieurs groupes époxys ou groupes époxys portés par un cycle, on peut citer le cis-2-butène-1,4-diol-diglycidyl éther, l'allyl glycidyl éther, le glycidyl (méth)acrylate, le 3,4-oxycyclohexyl(méth)acrylate.

A titre d'exemple d'agent de transfert comprenant un ou plusieurs groupes stannyles ou groupes stannyles portés par un cycle, on peut citer l'allyltributylstannane, le trans-1,2-bis(tributylstannyl)éthène.

A titre d'exemple d'agent de transfert comprenant un ou plusieurs groupes silanes ou groupes alcoxysilanes ou groupes silanes ou groupes alcoxysilanes portés par un cycle, on peut citer le (méth)acryloxyméthyl triméthoxysilane, le triméthoxyvinylsilane, le triéthoxyvinylsilane, le 6-triméthoxysilyl-1,2-hexène.

De manière particulièrement préférée, dans les formules (III), (IV) et (V) telle que définies ci-dessus, X₁, X₂ et X₃ sont des groupes fonctionnels comprenant un ou plusieurs groupes choisis parmi un halogène, une amine, une imine, un ammonium, une imide, un amide, un nitrile, un azo, un diazo, une hydrazo, un carbamate, un hydroxyle, un carbonyle, un carboxyle, un époxy, un sulfure, un disulfure, un thiocarbonyle, un trithiocarbamate, un sulfonyle, un sulfinyle, un silane, un alkoxysilane, un stannyle, un boré, un hétérocycle azoté, un hétérocycle oxygéné, un hétérocycle soufré et un groupement aromatique substitué par un ou plusieurs des groupes précédemment cités.

De manière particulièrement préférée, le ou les agents de transfert sont choisis parmi les composés de formule V.

Le ou les agents de transfert peuvent être utilisés seuls ou en combinaison de deux ou plusieurs d'entre eux.

De manière préférée, le ou les agents de transfert représentent de 0,01 à 50 % en moles, plus préférentiellement de 0,02 à 10 % en moles, et en particulier de 0,02 à 1 % en moles par rapport au nombre de moles de motifs d'isoprène dans le caoutchouc naturel.

Comme expliqué précédemment, le procédé selon l'invention comprend une étape d'ajout au latex d'un ou plusieurs solvants organiques choisis parmi les solvants hydrocarbonés cycliques, linéaires ou aromatiques (étape iv).

De manière préférée dans le procédé selon l'invention, le ou les solvants organiques permettent au catalyseur de métathèse d'être mieux solubilisé et donc plus réactif.

A titre d'exemple de solvants hydrocarbonés cycliques ou linéaires, on peut citer l'heptane, l'hexane, le pentane, le cyclohexane, le méthylcyclohexane, l'éther de pétrole et la décaline.

A titre d'exemple de solvants aromatiques, on peut citer le benzène, le toluène, le xylène et le nitrobenzène.

De manière préférée, le solvant organique utilisable dans le procédé selon l'invention est le toluène.

De manière préférée dans une variante de l'invention, le ou les agents de transfert et le ou les catalyseurs de réaction de métathèse sont ajoutés au milieu sous forme de solution dans le solvant organique.

Dans ce cas, le volume total de solvant organique dans le milieu correspond au volume des deux solutions de l'agent de transfert et du catalyseur de réaction de métathèse et au volume de solvant organique seul.

Le ou les solvants organiques peuvent être utilisés seuls ou en combinaison de deux ou plusieurs d'entre eux.

Le ou les solvants organiques représentent généralement de 1 à 50 % en volume, de préférence de 4 à 33 % en volume, par rapport au volume d'eau du latex.

Comme expliqué précédemment, le procédé selon l'invention comprend une étape d'ajout au latex d'un ou plusieurs catalyseurs de réaction de métathèse (étape v).

Le ou les catalyseurs de réaction de métathèse utilisables dans le procédé selon l'invention sont de préférence choisis parmi les complexes organométalliques, seuls ou en mélange, supportés ou non.

De préférence, le ou les catalyseurs sont choisis parmi les complexes de métal de transition à base de ruthénium, d'osmium ou d'iridium.

De manière particulièrement préférée, le ou les catalyseurs de réaction de métathèse sont des catalyseurs au ruthénium dit catalyseur de seconde et troisième génération, c'est-à dire un catalyseur comportant un carbène *N*-hétérocyclique.

A titre d'exemple, on peut citer les catalyseurs de Grubbs II, les catalyseurs d'Hoveyda-Grubbs II, le dichloro[1,3-bis(2-méthylphényl)-2-imidazolidinylidène](2-isopropoxyphénylméthylène)ruthénium(II), le [2-(1-méthyléthoxy-O)phénylméthyl-C](nitrato-O,O'){rel-(2R,5R,7S)-tricyclo[3.3.1.13,7]décane-2,1-diyl[3-(2,4,6-triméthylphényl)-1-imidazolidinyl-2-ylidène]}ruthénium, le dichloro[1,3-bis(2,4,6-triméthylphényl)-2-imidazolidinylidène](benzylidène)bis(3-bromopyridine)ruthénium(II), le dichloro[1,3-bis(2-méthylphényl)-2-imidazolidinylidène](benzylidène) (tricyclohexylphosphine) ruthénium(II), le dichloro[1,3-bis(2,4,6-triméthylphényl)-2-imidazolidinylidène](3-méthyl-2-butènylidène) (tricyclohexylphosphine)ruthénium(II), le dichloro[1,3-bis(2,4,6-triméthylphényl)-2-imidazolidinylidène][3-(2-pyridinyl)propylidène]ruthénium(II), le dichloro[1,3-bis(2,4,6-triméthylphényl)-2-imidazolidinylidène][(tricyclohexylphosphoranyl)méthylidène]ruthéniu m(II) tétrafluoroborate, et le dichloro[1,3-bis(2,6-isopropylphényl)-2-imidazolidinylidène](benzylidène) (tricyclohexylphosphine)ruthénium(II).

De manière préférée, le ou lesdits catalyseurs de réaction de métathèse représentent de 0,0001 à 1 % en moles, de préférence de 0,0001 à 0,1 % en moles, et en particulier de 0,002 à 0,1 % en moles, par rapport au nombre de moles de motifs d'isoprène dans le caoutchouc naturel.

Dans le procédé selon l'invention, les étapes i) à v) sont réalisées généralement sous agitation.

De manière préférée, le procédé selon l'invention comprend en outre une étape de réglage de la température du latex de caoutchouc naturel sous agitation, ladite étape étant réalisée après les étapes i) à v).

Ainsi, la température du latex varie généralement de 3°C à 80°C, et préférentiellement varie de 15°C à 60°C.

Une fois la température de la solution du latex de caoutchouc naturel atteinte, la solution est généralement agitée pendant une durée variant généralement de 5 mn à 24 heures, de préférence variant de 5 mn à 8 h, encore plus préférentiellement variant de 9 mn à 4 h.

De manière préférée, le procédé selon l'invention comprend en outre une étape d'addition d'un ou plusieurs agents de stoppage, ladite étape d'addition étant réalisée après les étapes i) à v), et après les éventuelles étapes de réglage de la température et d'agitation de la solution à la température sélectionnée précédemment et pendant la durée sélectionnée précédemment.

Le ou les agents de stoppage permettent de stopper la dépolymérisation du caoutchouc naturel.

Le ou les agents de stoppage peuvent être ajoutés sous forme pure ou en solution.

On peut notamment citer l'éthyl vinyl éther comme agent de stoppage.

La quantité d'agent de stoppage représente au moins la quantité en moles de catalyseur de réaction de métathèse introduite, et de préférence au moins 10 fois la quantité en moles de catalyseur de réaction de métathèse introduite dans le milieu réactionnel.

Dans un mode opératoire particulier, le procédé selon l'invention comprend les étapes suivantes :
a) une étape d'ajout au latex de caoutchouc naturel d'un ou plusieurs agents tensioactifs,
b) une étape de dilution dudit latex au moyen d'eau distillée, puis
c) une étape d'inertage par barbotage du latex de caoutchouc naturel, puis
d) une étape d'acidification du latex à un pH inférieur au point isoélectrique des protéines du latex de caoutchouc naturel par ajout au latex d'un ou plusieurs acides inorganiques, puis
e) une étape d'ajout au latex d'un ou plusieurs agents de transfert comprenant le ou lesdits groupes fonctionnels, puis
f) une étape d'ajout au latex d'un ou plusieurs solvants organiques choisis parmi les solvants hydrocarbonés cycliques, linéaires et aromatiques, puis
g) une étape d'ajout au latex d'un ou plusieurs catalyseurs de réaction de métathèse, puis
h) une étape de réglage de la température du latex à une température variant de 3°C à 80°C, puis agitation de la solution pendant une durée variant de 30 mn à 24 heures, puis
i) une étape d'ajout au latex d'un ou plusieurs agents de stoppage,
l'ensemble des étapes a) à i) se déroulant sous agitation du latex.

Les caractéristiques de ce mode opératoire particulier sont telles que définies précédemment.

De manière préférée, le procédé selon l'invention permet d'obtenir un latex de polyisoprène modifié.

L'invention a donc également pour objet le latex de polyisoprène modifié susceptible d'être obtenu par le procédé tel que défini précédemment, la masse molaire moyenne en nombre du polyisoprène variant de 50 à 600 kg/mol.

De manière particulièrement préféré, ce latex de polyisoprène modifié a une masse molaire moyenne en nombre variant de 108 à 600 kg/mol.

Dans la présente demande, les masses molaires moyenne en nombre et en masse sont mesurées au moyen de la chromatographie d'exclusion stérique (SEC) qui est expliquée plus loin.

Le procédé selon l'invention peut comprendre en outre une étape de coagulation du mélange réactionnel.

Cette étape permet de récupérer le polyisoprène modifié.

La coagulation du mélange réactionnel peut être réalisée notamment par l'addition d'un solvant choisi parmi les cétones et les alcools et notamment l'acétone, le méthanol, l'isopropanol et l'éthanol.

La coagulation du mélange réactionnel peut aussi être réalisée par extraction par entrainement à la vapeur en présence ou non d'un sel métallique, par exemple du chlorure de sodium ou du sulfate d'ammonium.

Le coagulum de caoutchouc naturel est ensuite généralement lavé à l'eau.

Le procédé selon l'invention peut comprendre en outre une étape de séchage du polyisoprène modifié obtenu, une fois coagulé.

De préférence, le polyisoprène modifié peut être séché sous vide ou à pression atmosphérique sous balayage d'azote.

Les températures de séchage peuvent varier de la température ambiante (25°C) à 130°C, préférentiellement de la température ambiante à 100°C, et encore plus préférentiellement de la température ambiante à 70°C.

En fonction du temps et de la température de réaction, du ou des agents de transferts utilisés et de la quantité du ou des agents de transferts utilisés, le procédé selon l'invention peut produire un polyisoprène modifié comprenant majoritairement l'espèce fonctionnalisée à l'une de ses deux extrémités ou comprenant majoritairement l'espèce fonctionnalisée à ses deux extrémités ou bien comprenant majoritairement un mélange de ces deux espèces.

L'invention a donc également pour objet le polyisoprène modifié susceptible d'être obtenu par le procédé tel que défini précédemment, la masse molaire moyenne en nombre du polyisoprène variant de 50 à 600 kg/mol.

De manière particulièrement préférée, ce polyisoprène modifié a une masse molaire moyenne en nombre variant de 108 à 600 kg/mol.

Dans une première variante, le polyisoprène modifié susceptible d'être obtenu par le procédé tel que décrit comprend majoritairement l'espèce fonctionnalisée à l'une de ses deux extrémités par un ou plusieurs groupes fonctionnels.

Dans une seconde variante, le polyisoprène modifié susceptible d'être obtenu par le procédé tel que décrit comprend majoritairement l'espèce fonctionnalisée à ses deux extrémités par un ou plusieurs groupes fonctionnels.

L'invention concerne aussi un polyisoprène modifié comprenant majoritairement un mélange de l'espèce de formule générale I suivante et de l'espèce de formule générale II suivante : 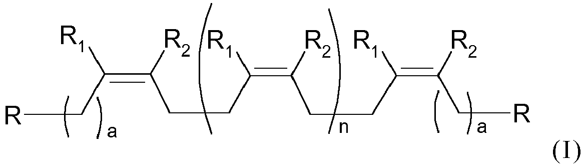 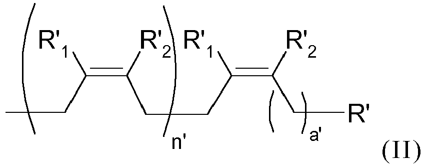
avec R₁, R₂, R'₁ et R'₂, indépendamment les uns des autres, choisis parmi un atome d'hydrogène ou un groupe méthyle, R₁ étant différent de R₂ et R'₁ étant différent de R'₂,
n et n', indépendamment l'un de l'autre, étant des nombres entiers variant de 735 à 8900,
R et R', indépendamment l'un de l'autre, étant des groupes fonctionnels comprenant un ou plusieurs groupes choisis parmi un halogène, une amine, une imine, un ammonium, une imide, un amide, un nitrile, un azo, un diazo, une hydrazo, un carbamate, un hydroxyle, un carbonyle, un carboxyle, un ester, un époxy, un sulfure, un disulfure, un thiocarbonyle, un trithiocarbamate, un sulfonyle, un sulfinyle, un silane, un alkoxysilane, un stannyle, un boré, un hétérocycle azoté, un hétérocycle oxygéné, un hétérocycle soufré et un groupement aromatique substitué par les groupes précédemment cités,
a et a', indépendamment l'un de l'autre, étant des nombres entiers variant de 0 à 20,
la masse molaire moyenne en nombre du polyisoprène variant de 50 à 600 kg/mol.

De manière préférée, ce polyisoprène a une masse molaire moyenne en nombre variant de 108 à 600 kg/mol.

De manière préférée, dans les formules I et II, R et R', indépendamment l'un de l'autre, sont des groupes fonctionnels comprenant un ou plusieurs groupes choisis parmi un halogène, une amine, une imine, un ammonium, une imide, un amide, un nitrile, un azo, un diazo, une hydrazo, un carbamate, un hydroxyle, un carbonyle, un carboxyle, un époxy, un sulfure, un disulfure, un thiocarbonyle, un trithiocarbamate, un sulfonyle, un sulfinyle, un silane, un alkoxysilane, un stannyle, un boré, un hétérocycle azoté, un hétérocycle oxygéné, un hétérocycle soufré et un groupement aromatique substitué par les groupes précédemment cités,

De manière préférée, ce polyisoprène est obtenu par le procédé selon l'invention décrit ci-dessus.

Dans une première variante préférée, le polyisoprène modifié comprend majoritairement l'espèce de formule générale (I) ci-dessus.

Dans une seconde variante préférée, le polyisoprène modifié comprend majoritairement l'espèce de formule générale (II) ci-dessus.

Le polyisoprène selon l'invention peut être utilisé en tant que tel ou en mélange avec un ou plusieurs autres composés. La présence de groupements fonctionnels à au moins une de ses deux extrémités permet d'envisager une utilisation dans les applications habituellement connues pour des polymères diéniques modifiés.

Il est connu, par exemple, de modifier la nature des polymères diéniques pour introduire des groupes fonctionnels afin d'optimiser les interactions entre l'élastomère et la charge renforçante au sein d'une composition de caoutchouc renforcée.

Ainsi, la structure particulière du polyisoprène modifié obtenu selon l'invention à partir d'un latex de caoutchouc naturel permet d'envisager son utilisation dans la fabrication de divers produits à base de caoutchouc renforcé en fonction de la nature de la fonction greffée et donc de l'agent de transfert fonctionnel utilisé.

L'invention concerne donc une composition élastomérique à base d'un ou plusieurs polyisoprènes modifiés tels que définis précédemment.

La composition élastomérique selon l'invention peut comprendre de préférence plus de 40 pce de polyisoprène modifié selon l'invention ; plus préférentiellement encore le taux de polyisoprène varie de 50 à 100 pce, en particulier de 70 à 100 pce.

La composition élastomérique selon l'invention peut comprendre un mélange de plusieurs polyisoprènes modifiés conformes à l'invention.

La composition élastomérique selon l'invention peut comprendre en outre une ou plusieurs charges renforçantes et un ou plusieurs système de réticulation.

On peut utiliser tout type de charge renforçante connue pour ses capacités à renforcer une composition de caoutchouc utilisable pour la fabrication de pneumatiques, par exemple du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, utilisés individuellement ou sous forme de mélanges, notamment les noirs du type HAF, ISAF, SAF conventionnellement utilisés dans les pneumatiques (noirs dits de grade pneumatique). On peut aussi utiliser, selon les applications visées, des noirs de séries plus élevées FF, FEF, GPF, SRF. Les noirs de carbone pourraient être par exemple déjà incorporés à l'élastomère diénique sous la forme d'un masterbatch, avant ou après greffage et de préférence après greffage (voir par exemple demandes WO 97/36724 ou WO 99/16600).

Comme charge inorganique renforçante autre que du noir de carbone, doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de pneumatiques ; une telle charge se caractérise généralement, de manière connue, par la présence de groupes hydroxyle (-OH) à sa surface.

L'état physique sous lequel se présente la charge renforçante est indifférent, que ce soit sous forme de poudre, de microperles, de granulés, de billes ou toute autre forme densifiée appropriée. Bien entendu on entend également par charge renforçante des mélanges de différentes charges renforçantes, en particulier de charges siliceuses et/ou alumineuses hautement dispersibles telles que décrites ci-après.

Comme charges inorganiques renforçantes autre que du noir de carbone conviennent notamment des charges minérales du type siliceuse, en particulier de la silice (SiO₂), ou du type alumineuse, en particulier de l'alumine (Al₂O₃).

De préférence, le taux de charge renforçante dans la composition varie de 10 à 200 pce, plus préférentiellement de 30 à 150 pce, en particulier de 50 à 120 pce, l'optimum étant, de manière connue en soi, différent selon les applications particulières visées.

Selon un mode de réalisation, la charge renforçante comprend majoritairement de la silice, de préférence le taux de noir de carbone présent dans la composition étant inférieur à 20 pce plus préférentiellement inférieur à 10 pce (par exemple entre 0,5 et 20 pce, notamment de 1 à 10 pce).

De préférence, la charge renforçante comprend majoritairement du noir de carbone, voire est exclusivement constituée de noir de carbone.

Lorsque la charge renforçante comprend une charge nécessitant l'utilisation d'un agent de couplage pour établir la liaison entre la charge et l'élastomère, la composition élastomérique selon l'invention comprend en outre, de manière classique, un agent susceptible d'assurer efficacement cette liaison. Lorsque la silice est présente dans la composition à titre de charge renforçante, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Dans la composition selon l'invention, la teneur en agent de couplage varie préférentiellement de 0,5 à 12 pce, étant entendu qu'il est en général souhaitable d'en utiliser le moins possible. La présence de l'agent de couplage dépend de celle de la charge inorganique renforçante autre que du noir de carbone. Son taux est aisément ajusté par l'homme du métier selon le taux de cette charge; il est typiquement de l'ordre de 0,5 à 15 % en poids par rapport à la quantité de charge inorganique renforçante autre que du noir de carbone.

L'homme du métier comprendra qu'à titre de charge équivalente de la charge inorganique renforçante autre que noir de carbone, pourrait être utilisée une charge renforçante d'une autre nature, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

La composition élastomérique conforme à l'invention peut également contenir, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisées telles que décrites dans les demandes WO-A-2006/069792, WO-A-2006/069793, WO-A-2008/003434 et WO-A-2008/003435.

La composition selon l'invention peut également contenir, en complément des agents de couplage, des activateurs de couplage de la charge renforçante ou plus généralement des agents d'aide à la mise en œ uvre susceptibles de manière connue, grâce à une amélioration de la dispersion de la charge dans la matrice de caoutchouc et à un abaissement de la viscosité des compositions, d'améliorer leur faculté de mise en œuvre à l'état cru.

Comme expliqué précédemment, la composition selon l'invention peut comprendre également un système de réticulation.

Cette réticulation permet la formation de liaisons covalentes entre les chaînes d'élastomères. Elle peut se faire à base soit de soufre, soit de donneurs de soufre et/ou de peroxyde et/ou de bismaléimides, des accélérateurs de vulcanisation, des activateurs de vulcanisation.

Le système de vulcanisation proprement dit est préférentiellement à base de soufre et d'un accélérateur primaire de vulcanisation, en particulier d'un accélérateur du type sulfénamide, tel que choisi dans le groupe constitué par disulfure de 2-benzothiazyle (en abrégé « MBTS »), N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI ») et les mélanges de ces composés.

Le soufre est utilisé à un taux préférentiel variant de 0,5 à 10 pce, plus préférentiellement de 0,5 à 5,0 pce, par exemple de 0,5 à 3,0 pce lorsque l'invention est appliquée à une bande de roulement de pneumatique. L'ensemble des accélérateurs primaires, secondaires et activateurs de vulcanisation est utilisé à un taux préférentiel variant de 0,5 à 10 pce, plus préférentiellement de 0,5 à 5,0 pce en particulier lorsque l'invention s'applique à une bande de roulement de pneumatique.

La composition élastomérique selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, des promoteurs d'adhésion (sels de Cobalt par exemple).

La composition finale ainsi obtenue peut ensuite être calandrée, par exemple sous forme d'une feuille, d'une plaque ou encore extrudée, par exemple pour former un profilé de caoutchouc utilisable comme produit semi-fini en caoutchouc destiné au pneumatique.

L'invention a donc pour objet un article semi-fini en caoutchouc pour pneumatique comprenant une composition de caoutchouc réticulable ou réticulée telle que définie précédemment.

Enfin, l'invention a pour objet un pneumatique comprenant un article semi-fini tel que défini ci-dessus.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples de réalisation de l'invention

### Mesures utilisées

Les élastomères sont caractérisés, avant cuisson, comme indiqué ci-après.

### Chromatographie d'exclusion stérique (SEC)

La chromatographie d'exclusion stérique (ou Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en masse (Mw) peuvent être déterminées et l'indice de polymolécularité ou polydispersité (Ip = Mw/Mn) calculé via un étalonnage dit de MOORE.

Il n'y a pas de traitement particulier de l'échantillon de polymère avant analyse. Celui-ci est simplement solubilisé, dans une solution de tétrahydrofurane contenant 1 % en volume de diisopropylamine, 1 % en volume de triéthylamine et 1 % en volume d'eau distillée, ou dans du chloroforme, à une concentration d'environ 1 g/l. Puis, la solution est filtrée sur filtre de porosité 0,45 µm avant injection.

L'appareillage utilisé est un chromatographe « WATERS alliance ». Le solvant d'élution est du tétrahydrofurane contenant 1 % en volume de diisopropylamine et 1 % en volume de triéthylamine, ou du chloroforme selon le solvant utilisé pour la mise en solution du polymère. Le débit est de 0,7 ml/min, la température du système est de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER ».

Les masses molaires moyennes calculées sont relatives à une courbe d'étalonnage réalisée à partir de polystyrènes étalons commerciaux « PSS READY CAL-KIT ».

### Spectroscopie de résonance magnétique nucléaire (RMN)

Les déterminations des taux de fonctions greffées sur la chaine polymère sont réalisées par une analyse RMN. Les spectres sont acquis sur un spectromètre 500 MHz BRUKER équipé d'une sonde « large bande » BBIz-grad 5 mm. L'expérience RMN ¹H quantitative, utilise une séquence simple impulsion 30° et un délai de répétition de 3 secondes entre chaque acquisition. Les échantillons sont solubilisés dans le chloroforme deuteré.

Le spectre RMN ¹H permet de quantifier les motifs acétate par intégration des signaux caractéristiques des protons -CH=C**H-**CH₂OCOCH₃, -C(CH₃)=C**H**-CH₂OCOCH₃, -CH=CH-C**H₂**OCOCH₃, qui apparaissent respectivement à des déplacements chimiques δ = 5,8 à 5,4 ppm, δ = 5,3 à 5,25 ppm et δ = 4,6 à 4,4 ppm.

### Origine des réactifs

Dans l'ensemble des exemples mentionnés ci-dessous, le catalyseur de Grubbs II, le 1,4-diacétoxybut-2-ène et l'acide phosphorique sont commercialisés par Aldrich. Le Brij 35® est commercialisé par Acros. Le toluène est purifié par passage sur garde d'alumine et barbotage à l'azote. Le latex de caoutchouc naturel utilisé dans les exemples est un latex HANR (« High Ammonia Natural Rubber ») commercial d'origine asiatique (Thaïlande) centrifugé une fois et stabilisé par 0,2 à 0,6 % massique d'ammoniaque et par 0,1 à 0,5 % d'hydroxyde de potassium.

### Exemples 1 à 8

Un exemple de synthèse de polyisoprène modifié selon l'invention (référence 8) ainsi que sept exemples comparatifs (références 1 à 7) sont réalisés selon le protocole de synthèse suivant et avec les réactifs et les teneurs en réactifs selon le tableau 1.

**Tableau 1**

| **Référence** | **Latex⁽¹⁾** | **Agent tensioactif⁽²⁾** | **H₃PO₄⁽³⁾** |
|---|---|---|---|
| **1** | 4 ml - 2,36 g de NR - 0,034 mol | 12 pce - 0,28 g | - |
| **2** | 4 ml - 2,36 g de NR - 0,034 mol | 12 pce - 0,28 g | 4 pce - 0,67 ml |
| **3** | 4 ml - 2,36 g de NR - 0,034 mol | 12 pce - 0,28 g | 4 pce - 0,67 ml |
| **4** | 4 ml - 2,36 g de NR - 0,034 mol | 12 pce - 0,28 g | - |
| **5** | 4 ml - 2,36 g de NR - 0,034 mol | 12 pce - 0,28 g | 4 pce - 0,67 ml |
| **6** | 4 ml - 2,36 g de NR - 0,034 mol | 12 pce - 0,28 g | - |
| **7** | 4 ml - 2,36 g de NR - 0,034 mol | 12 pce - 0,28 g | 4 pce - 0,67 ml |
| **8** | 4 ml - 2,36 g de NR - 0,034 mol | 12 pce - 0,28 g | 4 pce - 0,67 ml |
| **1** | - | - | - |
| **2** | - | - | - |
| **3** | 0,68 mmol - 3,4 ml | - | 5,3 ml |
| **4** | - | 0,023 mmol - 1,9 ml | 5,3 ml |
| **5** | - | 0,023 mmol - 1,9 ml | 5,3 ml |
| **6** | 0,68 mmol - (liquide pur) | 0,023 mmol - (solide pur) | - |
| **7** | 0,68 mmol - (liquide pur) | 0,023 mmol - (solide pur) | - |
| **8** | 0,68 mmol - 3,4 ml | 0,023 mmol - 1,9 ml | 5,25 ml |

| | | | |
|---|---|---|---|
| (1) Latex HANR (« High Ammonia Natural Rubber ») avec un DRC de 59 % en poids (DRC pour « Dry Rubber Content »), les quantités molaires sont données en nombre de moles de motifs d'isoprène (2) Brij 35® (3) Solution aqueuse à une concentration de 0,14 g/ml (4) Solution de 1,4-diacétoxybut-2-ène à 0,2 mol/L dans le toluène ou directement 1,4-diacétoxybut-2-ène sous forme liquide pur (5) Solution de Grubbs II à 0,012 mol/L dans le toluène ou directement Grubbs II sous forme solide pur (6) Toluène : le volume total ajouté au milieu réactionnel correspond au volume de la solution d'agent de transfert, au volume de la solution de catalyseur et au volume supplémentaire de solvant ajouté | | | |

### Protocole de synthèse

Un mélange du latex, de l'agent tensioactif et de 11 ml d'eau distillée est mis à barboter sous azote pendant 30 mn à température ambiante sous agitation (DRC final du caoutchouc naturel : 15 %).

La solution aqueuse d'acide phosphorique (références 2, 3, 5, 7 et 8) est ensuite additionnée à ce mélange sous agitation.

La solution d'agent de transfert ou l'agent de transfert pur (références 3, 6, 7 et 8) et la solution du catalyseur de réaction de métathèse ou le catalyseur de réaction de métathèse pur (références 4, 5, 6, 7 et 8) sont additionnées au mélange sous agitation.

Les mélanges réactionnels 1 à 8 sont agités à 40°C pendant 2 heures. 2 ml de l'agent de stoppage (éthyl vinyl éther) sont ensuite ajoutés aux mélanges réactionnels.

Les huit mélanges réactionnels sont ensuite coagulés dans le méthanol puis les coagulums sont séchés sous vide partiel pendant 48 heures à 60°C.

Les résultats RMN ¹H sont compilés dans le tableau 2 suivant et permettent d'évaluer le taux de fonctions acétates des chaines polyisoprène.

**Tableau 2**

| **Référence** | **Pourcentage de fonction acétate⁽¹⁾** |
|---|---|
| **1** | ND |
| **2** | ND |
| **3** | ND |
| **4** | ND |
| **5** | NQ |
| **6** | 0,08 |
| **7** | 0,17 |
| **8** | 0,61 |

| | |
|---|---|
| (1) taux de fonctions pour 100 motifs d'isoprène, ND : non détecté, NQ : non quantifié | |

Cette première série d'essais confirme qu'il est nécessaire d'avoir au moins un agent de transfert et un catalyseur de réaction de métathèse pour que la réaction de dépolymérisation fonctionne (référence 6 par rapport aux références 1 à 5).

Cependant, en présence d'un agent de transfert et d'un catalyseur de métathèse mais en absence de l'acide inorganique et du solvant organique, la réaction est peu efficiente avec un taux de fonctions très faible (référence 6).

La présence dans le milieu réactionnel d'un acide inorganique permet de doubler le taux de fonctions des chaines polyisoprène à temps de réaction identique (référence 7).

Cependant, la présence en plus d'un solvant organique (toluène) permet de multiplier par quasiment 4 le taux de fonctions des chaines polyisoprène (référence 8).

### Exemples 9 à 11 : Etude de l'influence de la concentration en acide inorganique et de la durée de la réaction.

Trois exemples de synthèse de polyisoprène modifié selon l'invention (références 9 à 11) sont réalisés selon le protocole des exemples 1 à 8 précédent et avec les réactifs et les teneurs en réactifs selon le tableau 3.

La durée de la réaction est de 2 heures pour les références 9 et 11 et de 20 heures pour la référence 10.

La comparaison de la référence 9 et de la référence 10 permet d'évaluer l'influence de la durée de réaction.

La comparaison de la référence 9 et de la référence 11 permet d'évaluer l'influence de la concentration en acide inorganique.

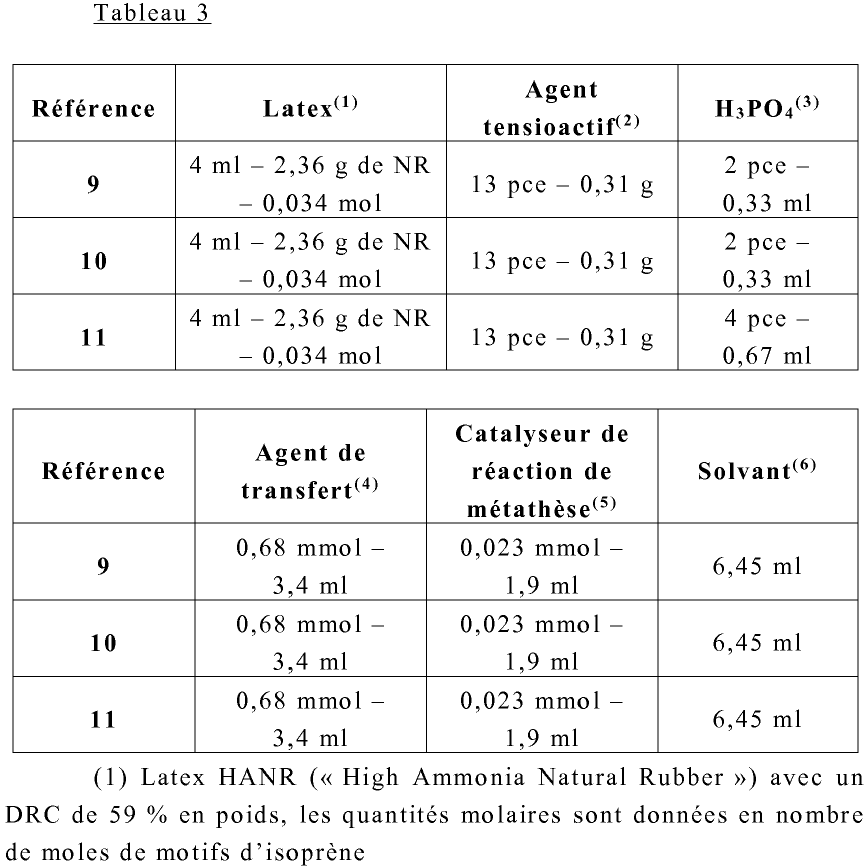

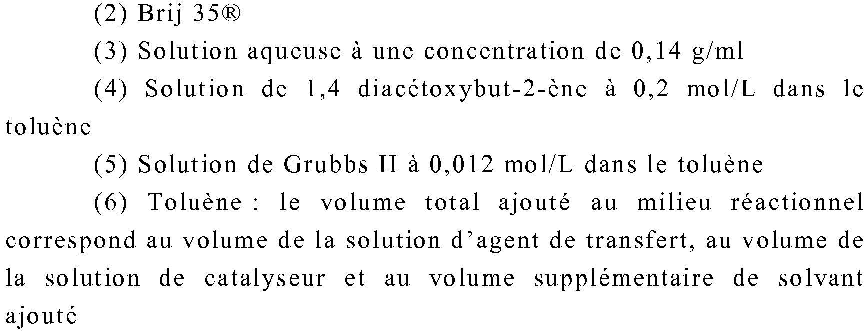

Les résultats de SEC et de RMN sont compilés dans le tableau 4 suivant.

**Tableau 4**

| | | **Référence 9** | **Référence 10** | **Référence 11** |
|---|---|---|---|---|
| **Teneur en H₃PO₄** | | 2 pce | 2 pce | 4 pce |
| **Durée de réaction** | | 2 heures | 20 heures | 2 heures |
| **SEC** | **Mn⁽¹⁾** | 108.10³ | 60.10³ | - |
| | **Ip** | 2 | 1,83 | - |
| **RMN ¹H** | **% acétate⁽²⁾** | 0,14 | 0,27 | 0,40 |
| | **Mn⁽³⁾** | 97.10³ | 50.10³ | 34.10³ |

| | | | | |
|---|---|---|---|---|
| (1) masse molaire moyenne en nombre (en g/mol) (2) taux de fonctions pour 100 motifs d'isoprène (3) masse molaire moyenne en nombre calculée d'après la RMN ¹H si la chaine polymérique est linéaire et difonctionnelle | | | | |

L'efficacité du système catalytique à iso-temps de réaction est bien dépendante de la quantité d'acide phosphorique introduite (comparaison référence 9 par rapport à référence 11).

La variation du temps de réaction (référence 10, 20 h) affecte également l'avancement de la réaction de dépolymérisation : le taux de fonctions est quasiment doublé (comparaison référence 9 par rapport à référence 10).

Les analyses de RMN ¹H et de SEC confirment bien la dépolymérisation du NR, qui semble conduire à un polyisoprène modifié comprenant majoritairement l'espèce fonctionnalisée à ses deux extrémités par une fonction acétate.

En effet, la SEC permet d'obtenir la mesure de la masse molaire moyenne en nombre. La RMN ¹H permet d'obtenir le pourcentage de fonction acétate pour 100 motifs d'isoprène.

En faisant l'hypothèse que le polyisoprène modifié est linéaire et fonctionnalisé à ses deux extrémités, on peut calculer une masse molaire moyenne en nombre théorique.

Plus la valeur théorique est proche de la valeur obtenue par la SEC, plus le polyisoprène modifié obtenu comprend majoritairement des espèces difonctionnelles.

### Exemples 12 à 18 : Etude de l'influence de la quantité de solvant organique

Trois exemples de synthèse de polyisoprène modifié selon l'invention (références 15, 17 et 18) ainsi que quatre exemples comparatifs (références 12, 13, 14 et 16) sont réalisés selon le protocole des exemples 1 à 8 précédent et avec les réactifs et les teneurs en réactifs selon le tableau 5 suivant.

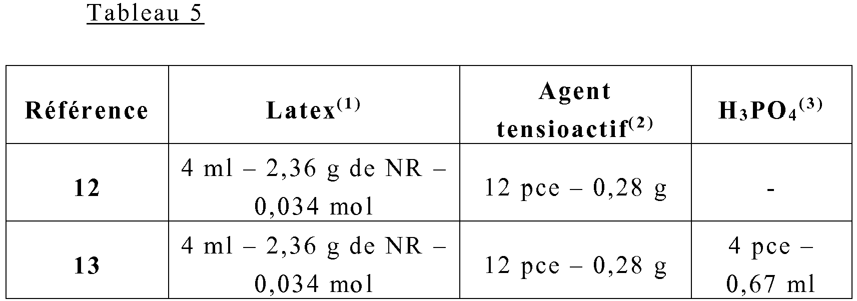

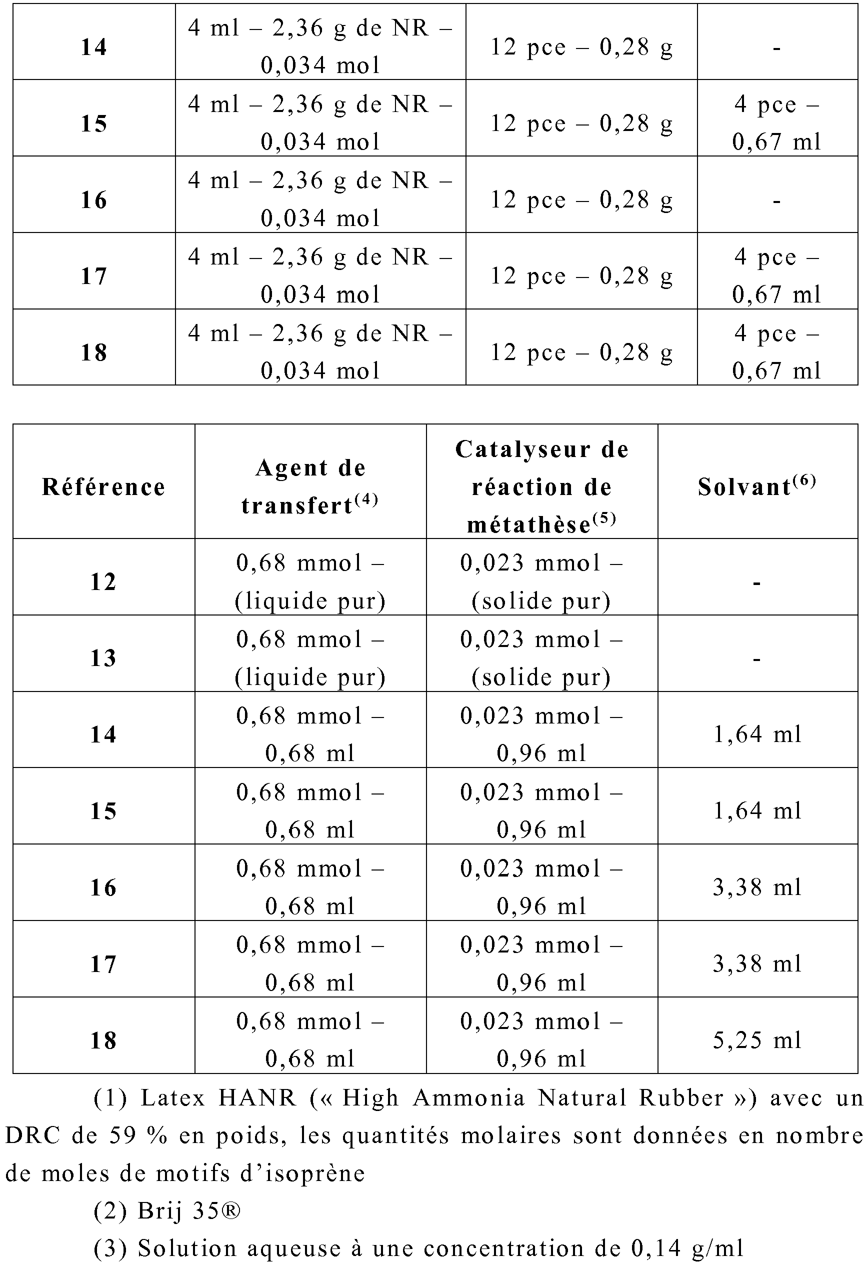

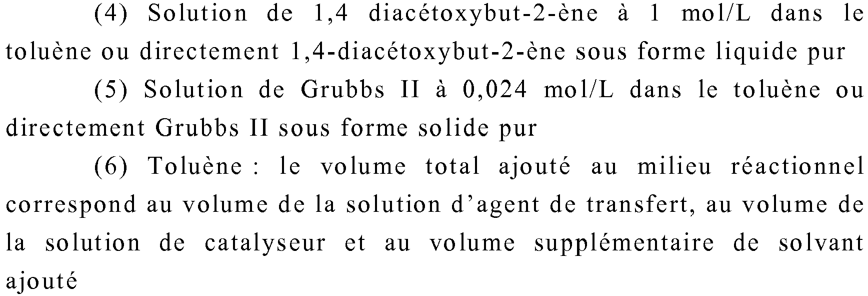

Les résultats RMN ¹H sont présentés dans le tableau 6 suivant et permettent d'évaluer le taux de fonctions acétates des chaines polyisoprène.

**Tableau 6**

| **Référence** | **Pourcentage de fonction acétate^{(1)<}** |
|---|---|
| **12** | NQ |
| **13** | 0,17 |
| **14** | 0,18 |
| **15** | 0,28 |
| **16** | 0,17 |
| **17** | 0,53 |
| **18** | 0,61 |

| | |
|---|---|
| (1) taux de fonctions pour 100 motifs d'isoprène, NQ : non quantifié | |

En l'absence de H₃PO₄ et de solvant organique (référence 12), le taux de fonctions n'est pas détectable.

En l'absence de H₃PO₄ et en présence de solvant organique (références 14 et 16), le taux de fonctions reste faible et notamment deux fois moins élevé qu'avec du H₃PO₄ (référence 15).

En présence de H₃PO₄, le taux de fonctions augmente lorsque la quantité de solvant organique augmente (références 13, 15, 17 et 18).

### Exemples 19 à 23 : Etude de l'influence de la concentration en agent tensioactif

Deux exemples de synthèse de polyisoprène modifié selon l'invention (références 22 et 23) ainsi que trois exemples comparatifs (références 19, 20 et 21) sont réalisés selon le protocole des exemples 1 à 8 précédent et avec les réactifs et les teneurs en réactifs selon le tableau 7 suivant.

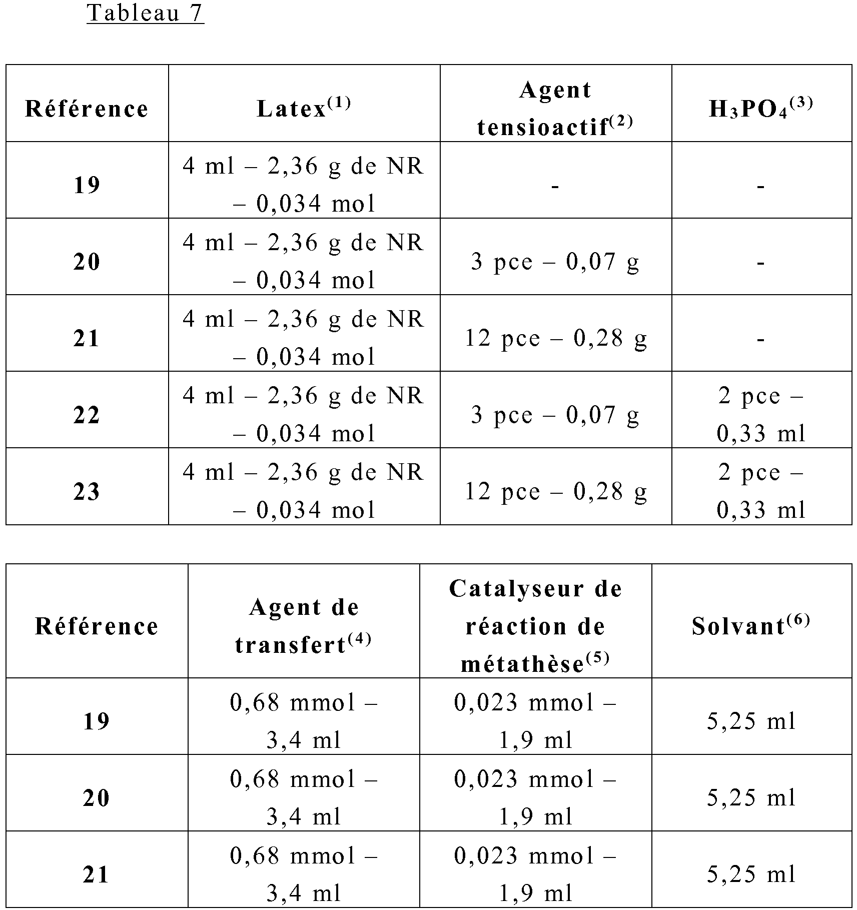

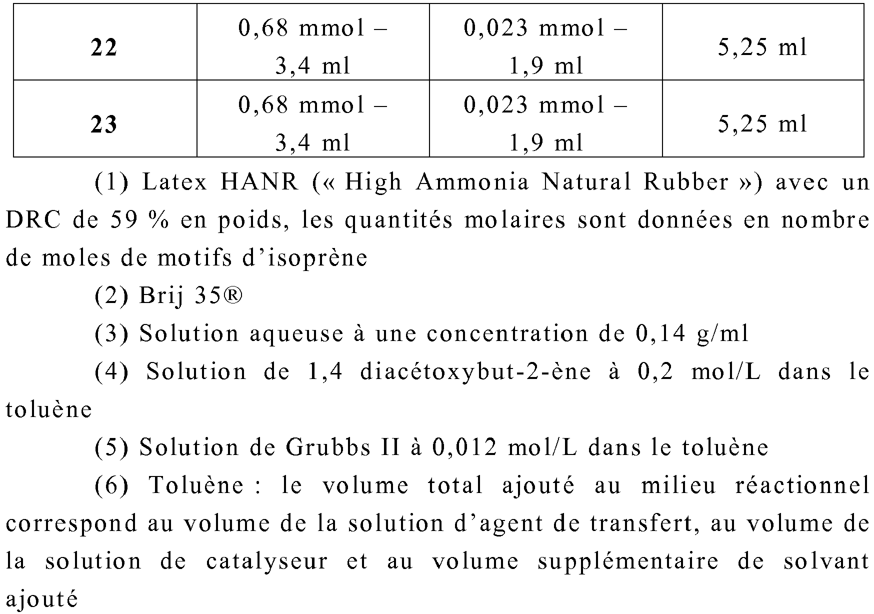

Les résultats RMN ¹H sont compilés dans le tableau 8 suivant et permettent d'évaluer le taux de fonctions acétates des chaines polyisoprène.

**Tableau 8**

| **Référence** | **Pourcentage de fonction acétate⁽¹⁾** |
|---|---|
| **19** | 0,10 |
| **20** | NQ |
| **21** | NQ |
| **22** | 0,68 |
| **23** | 0,52 |

| | |
|---|---|
| (1) taux de fonctions pour 100 motifs d'isoprène, NQ : non quantifié | |

En l'absence de H₃PO₄ (références 19, 20 et 21), les taux de fonctions sont extrêmement faibles, à tel point qu'ils sont généralement non-quantifiables (référence 20 et 21).

En présence de H₃PO₄ (références 22 et 23), l'analyse RMN ¹H nous indique que la réaction se déroule bien et forme des polyisoprènes modifiés comprenant des espèces fonctionnalisées avec d'importants taux de fonctions.

En revanche, une diminution de la quantité d'agent tensioactif n'a pas d'influence sur le taux de fonctions (comparaison références 22 et 23).

## Revendications

1. Procédé de dépolymérisation d'un latex de caoutchouc naturel pour la préparation d'un polyisoprène modifié comprenant majoritairement un mélange de l'espèce fonctionnalisée à l'une de ses deux extrémités par un ou plusieurs groupes fonctionnels et de l'espèce fonctionnalisée à ses deux extrémités par un ou plusieurs groupes fonctionnels, ledit procédé comprenant les étapes suivantes :
i) une étape d'ajout au latex d'un ou plusieurs agents tensioactifs, puis
ii) une étape d'acidification du latex à un pH inférieur au point isoélectrique des protéines du latex de caoutchouc naturel par l'ajout au latex d'un ou plusieurs acides inorganiques,
iii) une étape d'ajout au latex d'un ou plusieurs agents de transfert comprenant le ou lesdits groupes fonctionnels,
iv) une étape d'ajout au latex d'un ou plusieurs solvants organiques choisis parmi les solvants hydrocarbonés cycliques, linéaires et aromatiques,
v) une étape d'ajout au latex d'un ou plusieurs catalyseurs de réaction de métathèse,
chaque étape ii) à v) étant réalisée simultanément, avant ou après une autre des étapes ii) à v).

2. Procédé selon la revendication 1, **caractérisé en ce que** l'étape v) est réalisée simultanément ou après l'étape ii).

3. Procédé selon l'une quelconque des revendications précédentes, **caractérisé en ce que** le ou lesdits agents tensioactifs sont choisis parmi les agents tensioactifs anioniques, cationiques, amphotères et non-ioniques, de préférence le ou lesdits agents tensioactifs sont choisis parmi les agents tensioactifs non-ioniques, et de préférence l'agent tensioactif est le polyoxyéthylène glycol dodécyl éther.

4. Procédé selon l'une quelconque des revendications précédentes, **caractérisé en ce que** le ou lesdits agents tensioactifs représentent de 0,1 à 20 pce, de préférence de 0,5 à 15 pce, et en particulier de 1 à 10 pce, par rapport au caoutchouc naturel sec.

5. Procédé selon l'une quelconque des revendications précédentes, **caractérisé en ce que** le ou lesdits acides inorganiques sont choisis parmi les hydracides et les oxacides, et de préférence parmi l'acide fluorhydrique, l'acide chlorhydrique, l'acide bromhydrique, l'acide cyanhydrique, l'acide iodhydrique, l'acide perchlorique, l'acide chlorique, l'acide chloreux, l'acide hypochloreux, l'acide nitrique, l'acide nitreux, l'acide sulfurique, l'acide sulfureux et l'acide phosphorique, et de préférence l'acide inorganique est l'acide phosphorique.

6. Procédé selon l'une quelconque des revendications précédentes, **caractérisé en ce que** le ou lesdits acides inorganiques représentent de 0,1 à 20 pce, de préférence de 1 à 10 pce, par rapport au caoutchouc naturel sec.

7. Procédé selon l'une quelconque des revendications précédentes, **caractérisé en ce que** le ou les agents de transferts sont choisis parmi les composés de formules III, IV et V suivantes 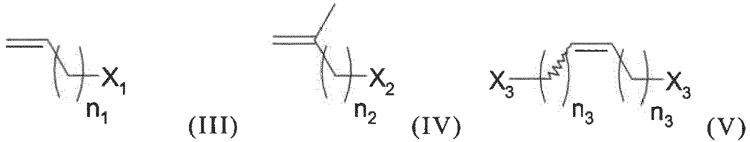
n₁, n₂ et n₃ étant des nombres entiers variant de 0 à 20,
X₁, X₂ et X₃ étant des groupes fonctionnels comprenant un ou plusieurs groupes choisis parmi un halogène, une amine, une imine, un ammonium, une imide, un amide, un nitrile, un azo, un diazo, une hydrazo, un carbamate, un hydroxyle, un carbonyle, un carboxyle, un ester, un époxy, un sulfure, un disulfure, un thiocarbonyle, un trithiocarbamate, un sulfonyle, un sulfinyle, un silane, un alkoxysilane, un stannyle, un boré, un hétérocycle azoté, un hétérocycle oxygéné, un hétérocycle soufré et un groupement aromatique substitué par les groupes précédemment cités, et de préférence X₁, X₂ et X3 sont des groupes fonctionnels comprenant un ou plusieurs groupes choisis parmi un halogène, une amine, une imine, un ammonium, une imide, un amide, un nitrile, un azo, un diazo, une hydrazo, un carbamate, un hydroxyle, un carbonyle, un carboxyle, un époxy, un sulfure, un disulfure, un thiocarbonyle, un trithiocarbamate, un sulfonyle, un sulfinyle, un silane, un alkoxysilane, un stannyle, un boré, un hétérocycle azoté, un hétérocycle oxygéné, un hétérocycle soufré et un groupement aromatique substitué par les groupes précédemment cités.

8. Procédé selon l'une quelconque des revendications précédentes, caractérisé en ce le ou lesdits agents de transfert représentent de 0,01 à 50 % en moles, de préférence de 0,02 à 10 % en moles, et en particulier de 0,02 à 1 % en moles par rapport au nombre de moles de motifs d'isoprène dans le caoutchouc naturel.

9. Procédé selon l'une quelconque des revendications précédentes, **caractérisé en ce que** le ou lesdits solvants organiques sont choisis parmi l'heptane, l'hexane, le pentane, le cyclohexane, le méthylcyclohexane, l'éther de pétrole, la décaline, le benzène, le toluène, le xylène et le nitrobenzène, et de préférence le solvant organique est le toluène.

10. Procédé selon l'une quelconque des revendications précédentes, **caractérisé en ce que** le ou lesdits solvants organiques représentent de 1 à 50 % en volume, de préférence de 4 à 33 % en volume, par rapport au volume d'eau du latex.

11. Procédé selon l'une quelconque des revendications précédentes, **caractérisé en ce que** le ou lesdits catalyseurs de réaction de métathèse sont choisis parmi les catalyseurs de Grubbs II, les catalyseurs d'Hoveyda-Grubbs II, le dichloro[1,3-bis(2-méthylphényl)-2-imidazolidinylidène](2-isopropoxyphénylméthylène)ruthénium(II), le [2-(1-méthyléthoxy-O)phénylméthyl-C](nitrato-O,O'){rel-(2R,5R,7S)-tricyclo[3.3.1.13,7]décane-2,1-diyl[3-(2,4,6-triméthylphényl)-1-imidazolidinyl-2-ylidène]}ruthénium, le dichloro[1,3-bis(2,4,6-triméthylphényl)-2-imidazolidinylidène](benzylidène)bis(3-bromopyridine)ruthénium(II), le dichloro[1,3-bis(2-méthylphényl)-2-imidazolidinylidène](benzylidène) (tricyclohexylphosphine) ruthénium(II), le dichloro[1,3-bis(2,4,6-triméthylphényl)-2-imidazolidinylidène](3-méthyl-2-buténylidène) (tricyclohexylphosphine)ruthénium(II), le dichloro[1,3-bis(2,4,6-triméthylphényl)-2-imidazolidinylidène][3-(2-pyridinyl)propylidène]ruthénium(II), le dichloro[1,3-bis(2,4,6-triméthylphényl)-2-imidazolidinylidène][(tricyclohexylphosphoranyl)méthylidène]ruthénium(II) tétrafluoroborate et le dichloro[1,3-bis(2,6-isopropylphényl)-2-imidazolidinylidène](benzylidène) (tricyclohexylphosphine)ruthénium(II).

12. Procédé selon l'une quelconque des revendications précédentes, **caractérisé en ce que** le ou lesdits catalyseurs de réaction de métathèse représentent de 0,0001 à 1 % en moles, de préférence de 0,0001 à 0,1 % en moles, et en particulier de 0,002 à 0,1 % en moles par rapport au nombre de moles de motifs d'isoprène dans le caoutchouc naturel.

13. Procédé selon l'une quelconque des revendications précédentes, **caractérisé en ce qu'**il comprend en outre une étape de réglage de la température de la solution de latex de caoutchouc naturel sous agitation, ladite étape étant réalisée après les étapes i) à v) à une température variant de 3°C à 80°C, préférentiellement de 15°C à 60°C, suivie d'une étape d'agitation de la solution de latex de caoutchouc naturel pendant une durée variant généralement de 5 mn à 24 heures, de préférence variant de 5 mn à 8 heures, encore plus préférentiellement variant de 9 mn à 4 heures.

14. Polyisoprène modifié comprenant majoritairement un mélange de l'espèce de formule générale I suivante et de l'espèce de formule générale II suivante : 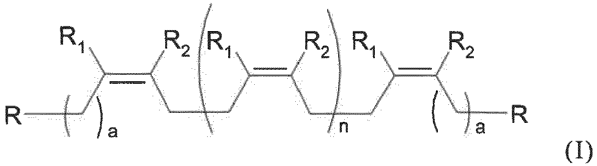 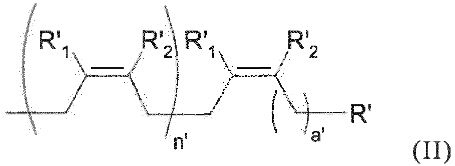
avec R₁, R₂, R'₁ et R'₂, indépendamment les uns des autres, choisis parmi un atome d'hydrogène ou un groupe méthyle, R₁ étant différent de R₂ et R'₁ étant différent de R'₂,
n et n', indépendamment l'un de l'autre, étant des nombres entiers variant de 735 à 8900,
R et R', indépendamment l'un de l'autre, étant des groupes fonctionnels comprenant un ou plusieurs groupes choisis parmi un halogène, une amine, une imine, un ammonium, une imide, un amide, un nitrile, un azo, un diazo, une hydrazo, un carbamate, un hydroxyle, un carbonyle, un carboxyle, un ester, un époxy, un sulfure, un disulfure, un thiocarbonyle, un trithiocarbamate, un sulfonyle, un sulfinyle, un silane, un alkoxysilane, un stannyle, un boré, un hétérocycle azoté, un hétérocycle oxygéné, un hétérocycle soufré et un groupement aromatique substitué par les groupes précédemment cités,
a et a', indépendamment l'un de l'autre, étant des nombres entiers variant de 0 à 20,
la masse molaire moyenne en nombre du polyisoprène variant de 50 à 600 kg/mol, de préférence variant de 108 à 600 kg/mol,
de préférence R et R', indépendamment l'un de l'autre, sont des groupes fonctionnels comprenant un ou plusieurs groupes choisis parmi un halogène, une amine, une imine, un ammonium, une imide, un amide, un nitrile, un azo, un diazo, une hydrazo, un carbamate, un hydroxyle, un carbonyle, un carboxyle, un époxy, un sulfure, un disulfure, un thiocarbonyle, un trithiocarbamate, un sulfonyle, un sulfinyle, un silane, un alkoxysilane, un stannyle, un boré, un hétérocycle azoté, un hétérocycle oxygéné, un hétérocycle soufré et un groupement aromatique substitué par les groupes précédemment cités.

15. Composition élastomérique à base d'un ou plusieurs polyisoprènes modifiés tels que définis dans la revendications 14.

16. Article semi-fini en caoutchouc pour pneumatique, **caractérisé en ce qu'**il comprend une composition de caoutchouc réticulable ou réticulée, telle que définie dans la revendication 15.

17. Pneumatique **caractérisé en ce qu'**il comprend un article semi-fini tel que défini dans la revendication 16.

## Patentansprüche

1. Verfahren zur Depolymerisation eines Naturkautschuk-Latex zur Herstellung eines modifizierten Polyisoprens, das hauptsächlich ein Gemisch der Spezies, die an einem ihrer beiden Enden durch eine oder mehrere funktionelle Gruppen funktionalisiert ist, und der Spezies, die an ihren beiden Enden durch eine oder mehrere funktionelle Gruppen funktionalisiert ist, umfasst, wobei das Verfahren die folgenden Schritte umfasst:
i) einen Schritt der Zugabe eines oder mehrerer Tenside zu dem Latex, dann
ii) einen Schritt der Ansäuerung des Latex auf einen pH-Wert unter dem isoelektrischen Punkt der Proteine des Naturkautschuk-Latex durch Zugabe einer oder mehrerer anorganischer Säuren zu dem Latex,
iii) einen Schritt der Zugabe eines oder mehrerer Übertragungsmittel, die die funktionelle Gruppe bzw. die funktionellen Gruppen umfassen,
iv) einen Schritt der Zugabe eines oder mehrerer organischer Lösungsmittel, die aus cyclischen, linearen und aromatischen KohlenwasserstoffLösungsmitteln ausgewählt werden,
v) einen Schritt der Zugabe eines oder mehrerer Metathesekatalysatoren zu dem Latex,
wobei jeder Schritt ii) bis v) gleichzeitig mit, vor oder nach einem anderen der Schritte ii) bis v) durchgeführt wird.

2. Verfahren nach Anspruch 1, **dadurch gekennzeichnet, dass** Schritt v) gleichzeitig mit oder nach Schritt ii) durchgeführt wird.

3. Verfahren nach einem der vorhergehenden Ansprüche, **dadurch gekennzeichnet, dass** das Tensid bzw. die Tenside aus anionischen, kationischen, amphoteren und nichtionischen Tensiden, ausgewählt ist bzw. sind, vorzugsweise das Tensid bzw. die Tenside aus nichtionischen Tensiden ausgewählt ist bzw. sind und es sich vorzugsweise bei dem Tensid um Polyoxyethylenglykoldodecylether handelt.

4. Verfahren nach einem der vorhergehenden Ansprüche, **dadurch gekennzeichnet, dass** das Tensid bzw. die Tenside 0,1 bis 20 phe, vorzugsweise 0,5 bis 15 phe und insbesondere 1 bis 10 phe, bezogen auf den trockenen Naturkautschuk, ausmacht bzw. ausmachen.

5. Verfahren nach einem der vorhergehenden Ansprüche, **dadurch gekennzeichnet, dass** die anorganische Säure bzw. die anorganischen Säuren aus Halogenwasserstoffsäuren und Oxosäuren und vorzugsweise aus Fluorwasserstoffsäure, Chlorwasserstoffsäure, Bromwasserstoffsäure, Cyanwasserstoffsäure, Iodwasserstoffsäure, Perchlorsäure, Chlorsäure, chloriger Säure, hypochloriger Säure, Salpetersäure, salpetriger Säure, Schwefelsäure, schweflige Säure und Phosphorsäure ausgewählt wird bzw. werden und vorzugsweise die anorganische Säure Phosphorsäure ist.

6. Verfahren nach einem der vorhergehenden Ansprüche, **dadurch gekennzeichnet, dass** die anorganische Säure bzw. die anorganischen Säuren 0,1 bis 20 phe, vorzugsweise 1 bis 10 phe, bezogen auf den trockenen Naturkautschuk, ausmacht bzw. ausmachen.

7. Verfahren nach einem der vorhergehenden Ansprüche, **dadurch gekennzeichnet, dass** das Übertragungsmittel bzw. die Übertragungsmittel aus den folgenden Verbindungen III, IV und V ausgewählt sind: 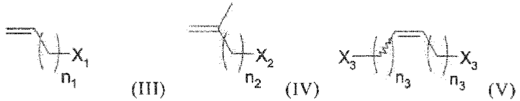
wobei n₁, n₂ und n₃ für ganze Zahlen im Bereich von 0 bis 20 stehen,
wobei X₁, X₂ und X₃ für funktionelle Gruppen stehen, die eine oder mehrere Gruppen umfassen, die aus einem Halogen, einem Amin, einem Imin, einem Ammonium, einem Imid, einem Amid, einem Nitril, einem Azo, einem Diazo, einem Hydrazo, einem Carbamat, einem Hydroxyl, einem Carbonyl, einem Carboxyl, einem Ester, einem Epoxy, einem Schwefel, einem Dischwefel, einem Thiocarbonyl, einem Trithiocarbamat, einem Sulfonyl, einem Sulfinyl, einem Silan, einem Alkoxysilan, einem Stannyl, einer Borgruppe, einem Stickstoff-Heterocyclus, einem Sauerstoff-Heterocyclus, einem Schwefel-Heterocyclus und einer aromatischen Gruppe, die durch die oben angegebenen Gruppen substituiert ist, ausgewählt sind und vorzugsweise X₁, X₂ und X₃ für funktionelle Gruppen stehen, die eine oder mehrere Gruppen umfassen, die aus einem Halogen, einem Amin, einem Imin, einem Ammonium, einem Imid, einem Amid, einem Nitril, einem Azo, einem Diazo, einem Hydrazo, einem Carbamat, einem Hydroxyl, einem Carbonyl, einem Carboxyl, einem Epoxy, einem Schwefel, einem Dischwefel, einem Thiocarbonyl, einem Trithiocarbamat, einem Sulfonyl, einem Sulfinyl, einem Silan, einem Alkoxysilan, einem Stannyl, einer Borgruppe, einem Stickstoff-Heterocyclus, einem Sauerstoff-Heterocyclus, einem Schwefel-Heterocyclus und einer aromatischen Gruppe, die durch die oben angegebenen Gruppen substituiert ist, ausgewählt sind.

8. Verfahren nach einem der vorhergehenden Ansprüche, **dadurch gekennzeichnet, dass** das Übertragungsmittel bzw. die Übertragungsmittel 0,01 bis 50 Mol-%, vorzugsweise 0,02 bis 10 Mol-% und insbesondere 0,02 bis 1 Mol-%, bezogen auf die Zahl der Mole von Isopren-Einheiten in dem Naturkautschuk, ausmacht bzw. ausmachen.

9. Verfahren nach einem der vorhergehenden Ansprüche, **dadurch gekennzeichnet, dass** das organische Lösungsmittel bzw. die organischen Lösungsmittel aus Heptan, Hexan, Pentan, Cyclohexan, Methylcyclohexan, Petrolether, Decalin, Benzol, Toluol, Xylol und Nitrobenzol ausgewählt wird bzw. werden und vorzugsweise das organische Lösungsmittel Toluol ist.

10. Verfahren nach einem der vorhergehenden Ansprüche, **dadurch gekennzeichnet, dass** das organische Lösungsmittel bzw. die organischen Lösungsmittel 1 bis 50 Vol.-%, vorzugsweise 4 bis 33 Vol.-%, bezogen auf das Wasservolumen des Latex, ausmacht bzw. ausmachen.

11. Verfahren nach einem der vorhergehenden Ansprüche, **dadurch gekennzeichnet, dass** der Katalysator bzw. die Katalysatoren für die Metathesereaktion aus Grubbs-II-Katalysatoren, Hoyveda-Grubbs-II-Katalysatoren, Dichloro[1,3-bis(2-methylphenyl)-2-imidazolidinyliden](2-isopropoxyphenylmethylen)-ruthenium(II), [2-(1-methylethoxy-0)phenylmethyl-C](nitrato-O,O'){rel-(2R,5R,7S)-tricyclo-[3.3.1.13,7]decan-2,1-diyl[3-(2,4,6-trimethylphenyl)-1-imidazolidinyl-2-yliden]}ruthenium, Dichloro[1,3-bis(2,4,6-trimethylphenyl)-2-imidazolidinyliden](benzyliden)bis(3-brompyridin)ruthenium(II), Dichloro[1,3-bis(2-methylphenyl)-2-imidazolidinyliden](benzyliden)-(tricyclohexylphosphin)ruthenium(II), Dichloro-[1,3-bis(2,4,6-trimethylphenyl)-2-imidazolidinyliden](3-methyl-2-butenyliden)(tricyclohexylphosphin)ruthenium(II), Dichloro[1,3-bis(2,4,6-trimethylphenyl)-2-imidazolidinyliden][3-(2-pyridinyl)propyliden]ruthenium(II), Dichloro[1,3-bis(2,4,6-trimethylphenyl)-2-imidazolidinyliden]-[(tricyclohexylphosphoranyl)methyliden]ruthenium-(II)-tetrafluoroborat und Dichloro[1,3-bis(2,6-isopropylphenyl)-2-imidazolidinyliden]-(benzyliden)(tricyclohexylphosphin)ruthenium(II) ausgewählt wird bzw. werden.

12. Verfahren nach einem der vorhergehenden Ansprüche, **dadurch gekennzeichnet, dass** der Katalysator bzw. die Katalysatoren für die Metathesereaktion 0,0001 bis 1 Mol-%, vorzugsweise 0,0001 bis 0,1 Mol-% und insbesondere 0,002 bis 0,1 Mol-%, bezogen auf die Zahl der Mole von Isopren-Einheiten in dem Naturkautschuk, ausmacht bzw. ausmachen.

13. Verfahren nach einem der vorhergehenden Ansprüche, **dadurch gekennzeichnet, dass** es außerdem einen Schritt der Regelung der Temperatur der Lösung von Naturkautschuk-Latex unter Rühren umfasst, wobei der Schritt nach den Schritten i) bis v) bei einer Temperatur im Bereich von 3 °C bis 80 °C, vorzugsweise von 15 °C bis 60 °C, durchgeführt wird, gefolgt von einem Schritt des Rührens der Lösung von Naturkautschuk über einen Zeitraum, der im Allgemeinen 5 min bis 24 Stunden, vorzugsweise 5 min bis 8 Stunden und noch weiter bevorzugt 9 min bis 4 Stunden beträgt.

14. Modifiziertes Polyisopren, das hauptsächlich ein Gemisch der Spezies der folgenden allgemeinen Formel I und der Spezies der folgenden allgemeinen Formel II umfasst: 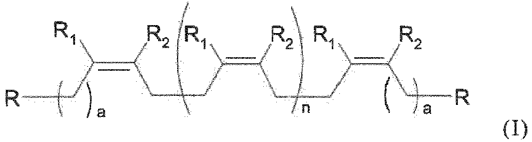 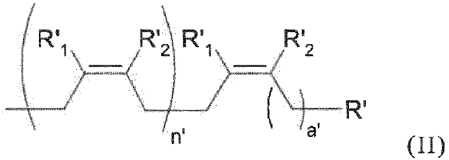
wobei R₁, R₂, R'₁ und R'₂ unabhängig voneinander aus einem Wasserstoffatom oder einer Methylgruppe ausgewählt sind, wobei R₁ von R₂ verschieden ist und R'₁ von R'₂ verschieden ist,
wobei n und n' unabhängig voneinander für ganze Zahlen im Bereich von 735 bis 8900 stehen,
wobei R und R' unabhängig voneinander für funktionelle Gruppen stehen, die eine oder mehrere Gruppen umfassen, die aus einem Halogen, einem Amin, einem Imin, einem Ammonium, einem Imid, einem Amid, einem Nitril, einem Azo, einem Diazo, einem Hydrazo, einem Carbamat, einem Hydroxyl, einem Carbonyl, einem Carboxyl, einem Ester, einem Epoxy, einem Schwefel, einem Dischwefel, einem Thiocarbonyl, einem Trithiocarbamat, einem Sulfonyl, einem Sulfinyl, einem Silan, einem Alkoxysilan, einem Stannyl, einer Borgruppe, einem Stickstoff-Heterocyclus, einem Sauerstoff-Heterocyclus, einem Schwefel-Heterocyclus und einer aromatischen Gruppe, die durch die oben angegebenen Gruppen substituiert ist, ausgewählt sind,
wobei a und a' unabhängig voneinander für ganze Zahlen im Bereich von 0 bis 20 stehen,
wobei die zahlenmittlere Molmasse des Polyisoprens im Bereich von 50 bis 600 kg/mol und vorzugsweise im Bereich von 108 bis 600 kg/mol liegt, vorzugsweise R und R' unabhängig voneinander für funktionelle Gruppen stehen, die eine oder mehrere Gruppen umfassen, die aus einem Halogen, einem Amin, einem Imin, einem Ammonium, einem Imid, einem Amid, einem Nitril, einem Azo, einem Diazo, einem Hydrazo, einem Carbamat, einem Hydroxyl, einem Carbonyl, einem Carboxyl, einem Epoxy, einem Schwefel, einem Dischwefel, einem Thiocarbonyl, einem Trithiocarbamat, einem Sulfonyl, einem Sulfinyl, einem Silan, einem Alkoxysilan, einem Stannyl, einer Borgruppe, einem StickstoffHeterocyclus, einem Sauerstoff-Heterocyclus, einem Schwefel-Heterocyclus und einer aromatischen Gruppe, die durch die oben angegebenen Gruppen substituiert ist, ausgewählt sind.

15. Elastomere Zusammensetzung auf Basis eines oder mehrerer modifizierter Polyisoprene gemäß Anspruch 14.

16. Kautschuk-Halbzeug für Reifen, **dadurch gekennzeichnet, dass** es eine vernetzbare oder vernetzte Kautschukzusammensetzung gemäß Anspruch 15 umfasst.

17. Reifen, **dadurch gekennzeichnet, dass** er ein Halbzeug gemäß Anspruch 16 umfasst.

## Claims

1. Process for the depolymerization of a natural rubber latex for the preparation of a modified polyisoprene predominantly comprising a mixture of the entity functionalized at one of its two ends by one or more functional groups and of the entity functionalized at both its ends by one or more functional groups, the said process comprising the following stages:
i) a stage of addition to the latex of one or more surface-active agents, then
ii) a stage of acidification of the latex to a pH lower than the isoelectric point of the proteins of the natural rubber latex by the addition, to the latex, of one or more inorganic acids,
iii) a stage of addition to the latex of one or more transfer agents comprising the said functional group(s),
iv) a stage of addition to the latex of one or more organic solvents chosen from cyclic, linear and aromatic hydrocarbon solvents,
v) a stage of addition to the latex of one or more metathesis reaction catalysts,
each stage ii) to v) being carried out simultaneously with, before or after another of the stages ii) to v).

2. Process according to Claim 1, **characterized in that** stage v) is carried out simultaneously with or after stage ii).

3. Process according to either one of the preceding claims, **characterized in that** the said surface-active agent(s) are chosen from anionic, cationic, amphoteric and nonionic surface-active agents; preferably, said surface-active agent(s) are chosen from nonionic surface-active agents and preferably the surface-active agent is polyoxyethylene glycol dodecyl ether.

4. Process according to any one of the preceding claims, **characterized in that** the surface-active agent (s) represent from 0.1 to 20 phr, preferably from 0.5 to 15 phr and in particular from 1 to 10 phr, with respect to the dry natural rubber.

5. Process according to any one of the preceding claims, **characterized in that** the said inorganic acid(s) are chosen from hydracids and oxyacids and preferably from hydrofluoric acid, hydrochloric acid, hydrobromic acid, hydrocyanic acid, hydriodic acid, perchloric acid, chloric acid, chlorous acid, hypochlorous acid, nitric acid, nitrous acid, sulfuric acid, sulfurous acid and phosphoric acid, and preferably the inorganic acid is phosphoric acid.

6. Process according to any one of the preceding claims, **characterized in that** the said inorganic acid(s) represent from 0.1 to 20 phr, preferably from 1 to 10 phr, with respect to the dry natural rubber.

7. Process according to any one of the preceding claims, **characterized in that** the transfer agent(s) are chosen from the compounds of following formulae III, IV and V: 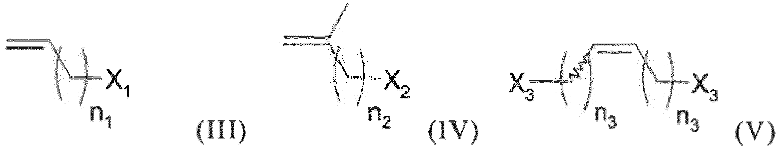 n₁, n₂ and n₃ being integers varying from 0 to 20, X₁, X₂ and X₃ being functional groups comprising one or more groups chosen from a halogen, an amine, an imine, an ammonium, an imide, an amide, a nitrile, an azo, a diazo, a hydrazo, a carbamate, a hydroxyl, a carbonyl, a carboxyl, an ester, an epoxy, a sulfide, a disulfide, a thiocarbonyl, a trithiocarbamate, a sulfonyl, a sulfinyl, a silane, an alkoxysilane, a stannyl, a boron compound, a nitrogen-comprising heterocycle, an oxygen-comprising heterocycle, a sulfur-comprising heterocycle and an aromatic group substituted by the abovementioned groups, and preferably X₁, X₂ and X₃ are functional groups comprising one or more groups chosen from a halogen, an amine, an imine, an ammonium, an imide, an amide, a nitrile, an azo, a diazo, a hydrazo, a carbamate, a hydroxyl, a carbonyl, a carboxyl, an epoxy, a sulfide, a disulfide, a thiocarbonyl, a trithiocarbamate, a sulfonyl, a sulfinyl, a silane, an alkoxysilane, a stannyl, a boron compound, a nitrogen-comprising heterocycle, an oxygen-comprising heterocycle, a sulfur-comprising heterocycle and an aromatic group substituted by the abovementioned groups.

8. Process according to any one of the preceding claims, **characterized in that** the said transfer agent(s) represent from 0.01 mol% to 50 mol%, preferably from 0.02 mol% to 10 mol% and in particular from 0.02 mol% to 1 mol%, with respect to the number of moles of isoprene units in the natural rubber.

9. Process according to any one of the preceding claims, **characterized in that** the said organic solvent(s) are chosen from heptane, hexane, pentane, cyclohexane, methylcyclohexane, petroleum ether, decalin, benzene, toluene, xylene and nitrobenzene, and preferably the organic solvent is toluene.

10. Process according to any one of the preceding claims, **characterized in that** the said organic solvent (s) represent from 1% to 50% by volume, preferably from 4% to 33% by volume, with respect to the volume of water of the latex.

11. Process according to any one of the preceding claims, **characterized in that** the said metathesis reaction catalyst(s) are chosen from Grubbs II catalysts, Hoveyda-Grubbs II catalyst, dichloro[1,3-bis(2-methylphenyl)-2-imidazolidinylidene](2-iso-propoxyphenylmethylene)ruthenium(II), [2-(1-methy1-ethoxy-O)phenylmethyl-C](nitrato-O,O'){rel-(2R,5R,7S)-tricyclo[3.3.1.13,7]decane-2,1-diyl[3-(2,4,6-trimethylphenyl)-1-imidazolidinyl-2-ylidene]}ruthenium, dichloro[1,3-bis(2,4,6-trimethylphenyl)-2-imidazol-idinylidene](benzylidene)bis(3-bromopyridine)ruthenium(II), dichloro[1,3-bis(2-methylphenyl)-2-imidazolidinylidene](benzylidene)(tricyclohexylphosphine)ruthenium(II), dichloro[1,3-bis(2,4,6-trimethylphenyl)-2-imidazolidinylidene] (3-methyl-2-butenylidene) (tricyclohexylphosphine)ruthenium(II), dichloro[1,3-bis(2,4,6-trimethylphenyl)-2-imidazolidinylidene][3-(2-pyridinyl)propylidene]ruthenium(II), dichloro[1,3-bis(2,4,6-trimethylphenyl)-2-imidazolidinylidene][(tricyclohexylphosphoranyl)methyl-idene]ruthenium(II) tetrafluoroborate and dichloro[1,3-bis(2,6-isopropylphenyl)-2-imidazolidinylidene] (benzylidene)(tricyclohexylphosphine)ruthenium(II).

12. Process according to any one of the preceding claims, **characterized in that** the said metathesis reaction catalyst(s) represent from 0.0001 mol% to 1 mol%, preferably from 0.0001 mol% to 0.1 mol% and in particular from 0.002 mol% to 0.1 mol%, with respect to the number of moles of isoprene units in the natural rubber.

13. Process according to any one of the preceding claims, **characterized in that** it additionally comprises a stage of adjustment of the temperature of the natural rubber latex solution with stirring, the said stage being carried out after stages i) to v), to a temperature varying from 3°C to 80°C, preferably from 15°C to 60°C, followed by a stage of stirring the natural rubber latex solution for a period of time generally varying from 5 min to 24 hours, preferably varying from 5 min to 8 hours, more preferably still varying from 9 min to 4 hours.

14. Modified polyisoprene predominantly comprising a mixture of the entity of following general formula I and of the entity of following general formula II: 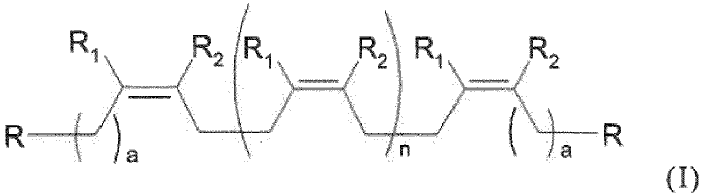 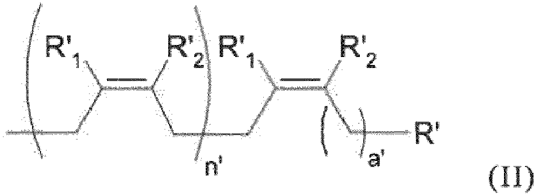
with R₁, R₂, R'₁ and R'₂, independently of one another, chosen from a hydrogen atom or a methyl group, R₁ being different from R₂ and R'₁ being different from R'₂,
n and n', independently of one another, being integers varying from 735 to 8900,
R and R', independently of one another, being functional groups comprising one or more groups chosen from a halogen, an amine, an imine, an ammonium, an imide, an amide, a nitrile, an azo, a diazo, a hydrazo, a carbamate, a hydroxyl, a carbonyl, a carboxyl, an ester, an epoxy, a sulfide, a disulfide, a thiocarbonyl, a trithiocarbamate, a sulfonyl, a sulfinyl, a silane, an alkoxysilane, a stannyl, a boron compound, a nitrogen-comprising heterocycle, an oxygen-comprising heterocycle, a sulfur-comprising heterocycle and an aromatic group substituted by the abovementioned groups,
a and a', independently of one another, being integers varying from 0 to 20,
the number-average molar mass of the polyisoprene varying from 50 to 600 kg/mol, preferably varying from 108 to 600 kg/mol,
preferably, R and R', independently of one another, are functional groups comprising one or more groups chosen from a halogen, an amine, an imine, an ammonium, an imide, an amide, a nitrile, an azo, a diazo, a hydrazo, a carbamate, a hydroxyl, a carbonyl, a carboxyl, an epoxy, a sulfide, a disulfide, a thiocarbonyl, a trithiocarbamate, a sulfonyl, a sulfinyl, a silane, an alkoxysilane, a stannyl, a boron compound, a nitrogen-comprising heterocycle, an oxygen-comprising heterocycle, a sulfur-comprising heterocycle and an aromatic group substituted by the abovementioned groups.

15. Elastomeric composition based on one or more modified polyisoprenes as defined in Claim 14.

16. Semifinished rubber article for a tyre, **characterized in that** it comprises a crosslinkable or crosslinked rubber composition as defined in Claim 15.

17. Tyre, **characterized in that** it comprises a semifinished article as defined in Claim 16.
